# EUROPEAN PATENT APPLICATION

(11) **EP 4 734 350 A1**
(43) Date of publication of application: **29.04.2026**
(21) Application number: 24825771.9
(22) Date of filing: 10.06.2024
(51) Int. Cl.: H02M 7/48, H02M 3/155

(54) **DIRECT POWER CONVERSION CIRCUIT**

(30) Priority: 23.06.2023 JP 2023103331
(71) Applicant: Daikin Industries, Ltd., Osaka-shi, Osaka 530-0001 (JP)
(72) Inventor: SAKAKIBARA, Kenichi, Osaka-shi, Osaka 530-0001 (JP)
(74) Representative: Hoffmann Eitle
(86) International application number: PCT/JP2024/021014
(87) International publication number: WO 2024/262366

(57) **Abstract**

To control a charging period of a capacitor in a charging-and-discharging circuit and contribute to achieve a continuous mode. A rectification circuit includes a first capacitor and a first reactor, and performs full-wave rectification and low-pass filtering on a single-phase alternating-current voltage to acquire a rectified voltage. A voltage between a first power source line and a second power source line is inputted to an inverter. A charging-and-discharging circuit includes a charging circuit and a discharging circuit. The discharging circuit includes a second capacitor provided between the first power source line and the second power source line. The charging circuit boosts the single-phase alternating-current voltage having undergone the full-wave rectification or the rectified voltage to charge the second capacitor for the charging period. The charging period has a duration that is set depending on a phase of the single-phase alternating-current voltage without depending on an amplitude of an input current inputted to the rectification circuit. When a voltage of the first reactor decreases, both of a start point and an end point of the charging period shift toward a delay phase side with respect to the phase. When a voltage of the first capacitor increases, both of the start point and the end point shift toward the delay phase side with respect to the phase.

## Description

### Technical Field

The present disclosure relates to a direct-type power conversion circuit.

### Background Art

PTL 1 discloses a direct-type power conversion circuit. The direct-type power conversion circuit includes a converter, a power buffer circuit, an inverter, and a direct-current link. As a single-phase alternating-current voltage is inputted, the converter outputs pulsation power to the direct-current link. The inverter converts a direct-current voltage in the direct-current link into an alternating-current voltage. The power buffer circuit includes a discharging circuit including a capacitor and a switch and a charging circuit for charging the capacitor. There are a case where power supplied to the inverter is supplied from the converter and a case where power supplied to the inverter is supplied from the power buffer circuit.

### Citation List

### Patent Literature

PTL 1: Japanese Patent No. 5874800

### Summary of Invention

### Technical Problem

A booster circuit including a reactor, a capacitor, and a switching element is known. As a current flowing through the reactor (hereinafter also simply referred to as a "reactor current") flows or does not flow to the capacitor, the capacitor is charged with a voltage exceeding a voltage applied to the reactor from outside of the booster circuit. It is possible to utilize such a booster circuit in a combination of the charging circuit and the capacitor of the direct-type power conversion circuit described above. For example, the power buffer circuit is achieved by a charging-and-discharging circuit that charges the capacitor and allows the capacitor to discharge electricity.

To allow a reactor current to flow, for example, a so-called critical mode is adopted. When the reactor current is allowed to flow in the critical mode, the switching element is turned on at a point in time when the reactor current decreases to zero due to charging of the capacitor, allowing the reactor current to start to flow to the switching element. It is possible to easily determine such a point in time based solely on whether the reactor current is present or absent without depending on a phase of a single-phase alternating-current voltage.

It is desirable to adopt a so-called continuous mode for a reactor current from a viewpoint of mitigating a current standard that is required for an element that a charging-and-discharging circuit includes by reducing a peak value of the reactor current and from a viewpoint of efficiency. When the continuous mode is adopted for the reactor current, it is necessary to set a timing at which the reactor current is not allowed to flow to the capacitor but is allowed to flow to the switching element in a state where the reactor current flows to the capacitor.

In view of the necessity of such a timing as described above, an object of the present disclosure is to control a charging period of a capacitor in a charging-and-discharging circuit of a direct-type power converter and contribute to achieve a continuous mode.

### Solution to Problem

A first aspect of a direct-type power conversion circuit (100, 100A, 100B, 100C, 100D) according to the present disclosure includes: a first power source line (LH); a second power source line (LL) to which a potential lower than a potential applied to the first power source line is applied; a rectification circuit (203) that has an input side to which a single-phase alternating-current voltage (Vin) is applied from an alternating-current (AC) power source (1) and an output side to which the first power source line and the second power source line are coupled, and that outputs a rectified voltage (Vrf) acquired by performing full-wave rectification and low-pass filtering on the single-phase alternating-current voltage (Vin); a charging-and-discharging circuit (4) provided between the first power source line and the second power source line on the output side of the rectification circuit; and an inverter (5) to which a direct-current voltage (Vdc) serving as a voltage between the first power source line and the second power source line is inputted.

The rectification circuit (203) includes: a diode rectifier (2; 2a, 2b) used for the full-wave rectification; a first capacitor (C3) coupled between the first power source line and the second power source line directly or indirectly via the diode rectifier (2; 2a); and a first reactor (L3) that performs the low-pass filtering in cooperation with the first capacitor (C3).

The charging-and-discharging circuit (4) includes: a discharging circuit (4a) that includes a second capacitor (C4) provided between the first power source line and the second power source line and that allows the second capacitor to discharge electricity; and a charging circuit (4b) that boosts the single-phase alternating-current voltage (|Vin|) having undergone the full-wave rectification or the rectified voltage (Vrf) to charge the second capacitor (C4) for a charging period (CH) having a duration that is set depending on a phase (θ) of the single-phase alternating-current voltage (Vin) without depending on an amplitude (Im) of an input current (Iin) inputted to the rectification circuit (203).

When a voltage (VL) of the first reactor (L3) decreases, both of a start point (ts) and an end point (te) of the charging period (CH) shift toward a delay phase side with respect to the phase (θ). When a voltage (V3) of the first capacitor (C3) increases, both of the start point (ts) and the end point (te) shift toward the delay phase side with respect to the phase.

As for a polarity of the voltage (VL) of the first reactor (L3), a direction opposite to a direction of a current that is supplied from the AC power source (1) and that flows between the diode rectifier (2; 2a) and the first reactor (L3) is adopted as positive.

A polarity of the voltage (V3) of the first capacitor (C3) coincides with a polarity of a voltage on a side to which the first capacitor (C3) is coupled among an output side and an input side of the diode rectifier (2; 2a).

A second aspect of the direct-type power conversion circuit (100, 100A, 100B, 100C, 100D) according to the present disclosure is the first aspect of the direct-type power conversion circuit, in which the second capacitor (C4) discharges electricity at a duty (dc) proportional to a product of, only in a period in which a cosine value (cos(2θ)) of a value that is twice the phase (θ) is positive, the cosine value and a command value (Vdc*) for the direct-current voltage.

In the second aspect, the charging circuit (4b) includes: a second reactor (L4) coupled in series to the second capacitor (C4) on the output side of the rectification circuit (203); a diode (D40) that is positioned on a high potential side of the second capacitor (C4), that is coupled between the second reactor (L4) and the second capacitor (C4), and that has a forward direction from the second reactor (L4) to the second capacitor (C4); and a switch (Sl) that switches whether to allow a reactor current (I4) flowing through the second reactor (L4) to flow to the second capacitor (C4) via the diode (D40) or to the second power source line (LL).

In the second aspect, the reactor current (I4) flows to the second power source line (LL) via the switch (Sl) with increasing magnitude from the end point (te) of a first charging period to the start point (ts) of a second charging period immediately after the first charging period. The start point (ts) is a point in time at which the reactor current (I4) increases and reaches an upper limit value (il^). The reactor current (I4) flows to the second capacitor (C4) in the charging period (CH).

In the second aspect, the upper limit value (il^) is a product of the amplitude (Im) and a predetermined function (G(θ)) related to the phase. The predetermined function (G(θ)) takes a value acquired by adding a correction term (ΔF) to a product (F(θ)) of a value acquired by subtracting a half value ((2·sin²θ)⁻¹) of an inverse number of a square (sin²θ) of a sine value of the phase from 1 and an absolute value (|sinθ|) of the sine value.

In the second aspect, the correction term (ΔF) increases as the voltage (VL) of the first reactor (L3) decreases. The correction term (ΔF) increases as the voltage (V3) of the first capacitor (C3) increases.

A third aspect of the direct-type power conversion circuit (100, 100A, 100C, 100D) according to the present disclosure is the first aspect of the direct-type power conversion circuit, in which the second capacitor (C4) discharges electricity at a duty (dc) proportional to a product of a square (cos²θ) of a cosine value (cosθ) of the phase (θ) and a command value (Vdc*) for the direct-current voltage.

In the third aspect, the charging circuit (4b) includes: a second reactor (L4) coupled in series to the second capacitor (C4) on the output side of the rectification circuit (203); a diode (D40) that is positioned on a high potential side of the second capacitor (C4), that is coupled between the second reactor (L4) and the second capacitor (C4), and that has a forward direction from the second reactor (L4) to the second capacitor (C4); and a switch (Sl) that switches whether to allow a reactor current (I4) flowing through the second reactor (L4) to flow to the second capacitor (C4) via the diode (D40) or to the second power source line (LL).

In the third aspect, the reactor current (I4) flows to the second power source line (LL) via the switch (Sl) with increasing magnitude from the end point (te) of a first charging period to the start point (ts) of a second charging period immediately after the first charging period. The start point (ts) is a point in time at which the reactor current (I4) increases and reaches an upper limit value (il^). The reactor current (I4) flows to the second capacitor (C4) in the charging period (CH).

In the third aspect, the upper limit value (il^) is a product of the amplitude (Im) and a predetermined function (G(θ)) related to the phase. The predetermined function (G(θ)) takes a value acquired by adding a correction term (ΔF) to a product (F(θ)) of a value acquired by adding 1/2 to a half value of a product of a cosine value (cos(2θ)) of a value that is twice the phase and a coefficient (1 - kb) equal to or greater than 0 and equal to or smaller than 1 and an absolute value (|sinθ|) of a sine value.

In the third aspect, the correction term (ΔF) increases as the voltage (VL) of the first reactor (L3) decreases. The correction term (ΔF) increases as the voltage (V3) of the first capacitor (C3) increases.

A fourth aspect of the direct-type power conversion circuit (100, 100A, 100B, 100C, 100D) according to the present disclosure is the first aspect of the direct-type power conversion circuit, in which the second capacitor (C4) discharges electricity at a duty (dc) proportional to a product of, only in a period in which a cosine value (cos(2θ)) of a value that is twice the phase (θ) is positive, the cosine value and an amplitude (Vm) of the single-phase alternating-current voltage.

In the fourth aspect, the charging circuit (4b) includes: a second reactor (L4) coupled in series to the second capacitor (C4) on the output side of the rectification circuit

(203); a diode (D40) that is positioned on a high potential side of the second capacitor (C4), that is coupled between the second reactor (L4) and the second capacitor (C4), and that has a forward direction from the second reactor (L4) to the second capacitor (C4); and a switch (Sl) that switches whether to allow a reactor current (I4) flowing through the second reactor (L4) to flow to the second capacitor (C4) via the diode (D40) or to the second power source line (LL).

In the fourth aspect, the reactor current (I4) flows to the second power source line (LL) via the switch (Sl) with increasing magnitude from the end point (te) of a first charging period to the start point (ts) of a second charging period immediately after the first charging period. The start point (ts) is a point in time at which the reactor current (I4) increases and reaches an upper limit value (il^). The reactor current (I4) flows to the second capacitor (C4) in the charging period (CH).

In the fourth aspect, the upper limit value (il^) is a product of the amplitude (Im) and a predetermined function (G(θ)) related to the phase. The predetermined function (G(θ)) takes a value acquired by adding a correction term (ΔF) to a product (F(θ)) of a value acquired by subtracting a half value ((2·sin²/(θ))⁻¹) of an inverse number of a square (sin²(θ)) of a sine value of the phase from 1, a coefficient (kb) equal to or greater than 0 and equal to or smaller than 1, a coefficient (π/√8), and an absolute value (|sinθ|) of the sine value.

In the fourth aspect, the correction term (ΔF) increases as the voltage (VL) of the first reactor (L3) decreases. The correction term (ΔF) increases as the voltage (V3) of the first capacitor (C3) increases.

A fifth aspect of the direct-type power conversion circuit (100, 100A, 100C, 100D) according to the present disclosure is the first aspect of the direct-type power conversion circuit, in which the second capacitor (C4) discharges electricity at a duty (dc) taking a value (1 - B) acquired by subtracting a first value (B) from 1.

In the fifth aspect, the charging circuit (4b) includes: a second reactor (L4) coupled in series to the second capacitor (C4) on the output side of the rectification circuit (203); a diode (D40) that is positioned on a high potential side of the second capacitor (C4), that is coupled between the second reactor (L4) and the second capacitor (C4), and that has a forward direction from the second reactor (L4) to the second capacitor (C4); and a switch (Sl) that switches whether to allow a reactor current (I4) flowing through the second reactor (L4) to flow to the second capacitor (C4) via the diode (D40) or to the second power source line (LL).

In the fifth aspect, the reactor current (I4) flows to the second power source line (LL) via the switch (Sl) with increasing magnitude from the end point (te) of a first charging period to the start point (ts) of a second charging period immediately after the first charging period. The start point (ts) is a point in time at which the reactor current (I4) increases and reaches an upper limit value (il^). The reactor current (I4) flows to the second capacitor (C4) in the charging period (CH).

In the fifth aspect, the upper limit value (il^) is a product of the amplitude (Im) and a predetermined function (G(θ)) related to the phase. The predetermined function (G(θ)) takes a sum of a value (F(θ)) acquired by subtracting a product (B·J) of the first value (B) and a second value (J) from an absolute value (lsinθ|) of a sine value of the phase and a correction term (ΔF).

In the fifth aspect, the first value (B) is a ratio ([Vdc* - Vc] / [Vrec - Vc]) of, with respect to a value (Vrec - Vc) acquired by subtracting a voltage (Vc) of the second capacitor (C4) from a product (Vrec) of an amplitude (Vm) of the single-phase alternating-current voltage and the absolute value (lsinθ|), a value (Vdc* - Vc) acquired by subtracting the voltage (Vc) of the second capacitor from a command value (Vdc*) for the direct-current voltage. The second value (J) is a product of a half value of a value acquired by subtracting, from 1, a product of a cosine value (cos(2θ)) of a value that is twice the phase and a coefficient (1 - kb) equal to or greater than 0 and equal to or smaller than 1 and a ratio (Vm / Vdc*) of the amplitude (Vm) of the single-phase alternating-current voltage with respect to the command value (Vdc*) for the direct-current voltage.

In the fifth aspect, the correction term (ΔF) increases as the voltage (VL) of the first reactor (L3) decreases. The correction term (ΔF) increases as the voltage (V3) of the first capacitor (C3) increases.

A sixth aspect of the direct-type power conversion circuit (100, 100A, 100B, 100C, 100D) according to the present disclosure is any one of the second to fifth aspects of the direct-type power conversion circuit, in which the duration of the charging period (CH) is proportional to a sum (G(θ)) of a first amount (F(θ)) that depends on the phase (θ) without depending on both of the voltage (VL) of the first reactor (L3) and the voltage (V3) of the first capacitor (C3) and a second amount (ΔF) that depends on one or both of the voltage (VL) of the first reactor (L3) and the voltage (V3) of the first capacitor (C3).

A seventh aspect of the direct-type power conversion circuit (100, 100A, 100B, 100C, 100D) according to the present disclosure is the first aspect of the direct-type power conversion circuit, in which the charging circuit (4b) performs a chopping of a second input current (I4) inputted to the charging circuit (4b) to charge the second capacitor (C4).

In the seventh aspect, the charging period (CH) decreases as a value acquired by dividing an average value of the second input current (I4) in a cycle (Tsw) of the chopping by a maximum value of the average value decreases. The charging period (CH) increases as the voltage (VL) of the first reactor (L3) decreases. The charging period (CH) increases as the voltage (V3) of the first capacitor (C3) increases.

For example, the first capacitor (C3) is directly coupled between the first power source line (LH) and the second power source line (LL), and, as for the polarity of the voltage (V3) of the first capacitor (C3), a direction from the second power source line (LL) to the first power source line (LH) is adopted as positive.

Alternatively, for example, the first capacitor (C3) is more distant from the inverter (5) than the diode rectifier (2; 2a), and, as for the polarity of the voltage (V3) of the first capacitor (C3), a direction from a low potential to a high potential of the single-phase alternating-current voltage (Vin) is adopted as positive.

Alternatively, for example, the first reactor (L3) is provided between the diode rectifier (2; 2a) and the first capacitor (C3), and, as for the polarity of the voltage (VL) of the first reactor (L3), a direction opposite to a direction of a current (I2) flowing to the first reactor (L3) is adopted as positive.

Alternatively, for example, the first reactor (L3) is more distant from the inverter (5) than the diode rectifier (2; 2a), and, as for the polarity of the voltage (VL) of the first reactor (L3), a direction from a low potential to a high potential of the single-phase alternating-current voltage (Vin) is adopted as positive.

Alternatively, for example, the charging circuit (4b) includes: a second reactor (L4) coupled in series to the second capacitor (C4) between the first power source line (LH) and the second power source line (LL) on a side closer to the first power source line (LH) than the second capacitor; a diode (D40) that is coupled between the second reactor (L4) and the second capacitor (C4), and that has a forward direction from the second reactor (L4) to the second capacitor (C4); and a switch (Sl) that switches whether to allow a reactor current (I4) flowing from the first power source line to the second reactor (L4) to flow to the second capacitor (C4) via the diode (D40) or to the second power source line (LL). The rectified voltage (Vrf) is applied to a series coupling of the switch (Sl) and the second reactor (L4).

Alternatively, for example, the rectification circuit (203) further includes a second diode rectifier (2b) that performs the full-wave rectification on the single-phase alternating-current voltage (Vin) to acquire a second rectified voltage (|Vin|). The charging circuit (4b) includes: a second reactor (L4) coupled in series to the second capacitor (C4) on an output side of the second diode rectifier (2b); a diode (D40) that is positioned on a high potential side of the second capacitor (C4), that is coupled between the second reactor (L4) and the second capacitor (C4), and that has a forward direction from the second reactor (L4) to the second capacitor (C4); and a switch (Sl) that switches whether to allow a reactor current (I4) flowing from the second diode rectifier (2b) to the second reactor (L4) to flow to the second capacitor (C4) via the diode (D40) or to the second power source line (LL).

Alternatively, for example, the charging circuit (4b) includes: a second reactor (L4) coupled in series to the second capacitor (C4) on the output side of the diode rectifier (2) without interposing the first reactor (L3); a diode (D40) that is positioned on a high potential side of the second capacitor (C4), that is coupled between the second reactor (L4) and the second capacitor (C4), and that has a forward direction from the second reactor (L4) to the second capacitor (C4); and a switch (Sl) that switches whether to allow a reactor current (I4) flowing from the rectification circuit (203) to the second reactor (L4) to flow to the second capacitor (C4) via the diode (D40) or to the second power source line (LL).

The direct-type power conversion circuit according to the present disclosure controls a charging period of a capacitor in a charging-and-discharging circuit and contributes to achieve a continuous mode.

### Brief Description of Drawings

[Fig. 1] Fig. 1 is a circuit diagram exemplifying a configuration of a direct-type power conversion circuit according to an embodiment of the present disclosure.
[Fig. 2] Fig. 2 is a block diagram exemplifying a configuration of a control device.
[Fig. 3] Fig. 3 is a block diagram exemplifying a configuration of a block.
[Fig. 4] Fig. 4 is a graph schematically exemplifying operation of a charging operation control unit.
[Fig. 5] Fig. 5 is a graph exemplifying a relationship between an input current and a ripple rate.
[Fig. 6] Fig. 6 is a graph exemplifying a relationship between an input current and a ripple rate.
[Fig. 7] Fig. 7 is a graph exemplifying a relationship between an amplitude of a variation and a ripple rate.
[Fig. 8] Fig. 8 is graphs exemplifying chronological changes of a function, an input current, a switching cycle, an off period, an on period, and duties.
[Fig. 9] Fig. 9 is graphs exemplifying chronological changes of a function, an input current, a switching cycle, an off period, an on period, and duties.
[Fig. 10] Fig. 10 is a graph exemplifying a waveform of an input current when continuous mode control is adopted in the direct-type power conversion circuit.
[Fig. 11] Fig. 11 is a graph exemplifying a waveform of the input current when the continuous mode control is adopted in the direct-type power conversion circuit.
[Fig. 12] Fig. 12 is a graph exemplifying a relationship between a degree of a higher harmonic wave component and a higher harmonic wave current where a frequency of a single-phase alternating-current voltage serves as a fundamental frequency.
[Fig. 13] Fig. 13 is a graph exemplifying the relationship between the degree of the higher harmonic wave component and the higher harmonic wave current where the frequency of the single-phase alternating-current voltage serves as the fundamental frequency.
[Fig. 14] Fig. 14 is a graph exemplifying a relationship between output power from an inverter and an average value of an output voltage from the inverter.
[Fig. 15] Fig. 15 is a graph exemplifying a relationship between the output power and a switching frequency.
[Fig. 16] Fig. 16 is a graph exemplifying a relationship between the output power and efficiency of the direct-type power conversion circuit.
[Fig. 17] Fig. 17 is a circuit diagram exemplifying a configuration of a direct-type power conversion circuit according to a first modification of the present disclosure.
[Fig. 18] Fig. 18 is a circuit diagram exemplifying a configuration of a direct-type power conversion circuit according to a second modification of the present disclosure.
[Fig. 19] Fig. 19 is a circuit diagram exemplifying a configuration of a direct-type power conversion circuit according to a third modification of the present disclosure.
[Fig. 20] Fig. 20 is a circuit diagram exemplifying a configuration of a direct-type power conversion circuit according to a fourth modification of the present disclosure.
[Fig. 21] Fig. 21 is a graph illustrating waveforms of an input current, a current, and a reactor current for comparison of a modification of a variable term according to the present disclosure.
[Fig. 22] Fig. 22 is a graph illustrating the waveforms of the input current, the current, and the reactor current according to the modification of the variable term according to the present disclosure.

### Description of Embodiments

### <Outline of Configuration>

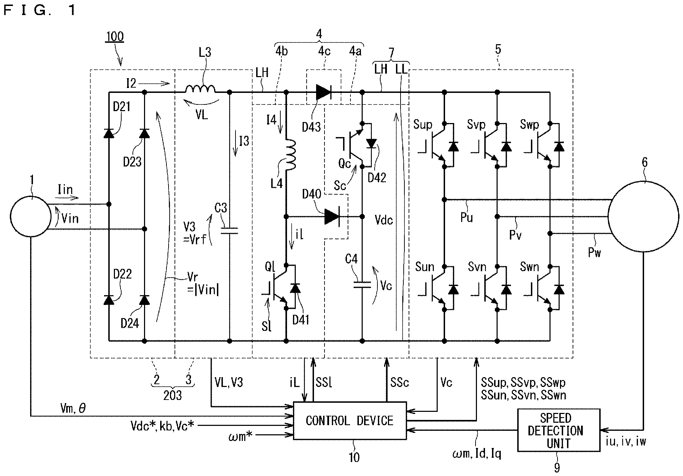

Fig. 1 is a circuit diagram exemplifying a configuration of a direct-type power conversion circuit 100 according to an embodiment of the present disclosure. The direct-type power conversion circuit 100 includes a diode rectifier 2, an inductor-capacitor (LC) filter 3, a charging-and-discharging circuit 4, and an inverter 5. The direct-current power source lines LH and LL function as a direct-current link 7 between the inverter 5 and the charging-and-discharging circuit 4. A potential lower than a potential applied to the direct-current power source line LH is applied to the direct-current power source line LL.

It is possible to grasp the combination of the diode rectifier 2 and the LC filter 3 as a rectification circuit 203 having an input side to which a single-phase alternating-current voltage Vin is applied and an output side to which the direct-current power source lines LH and LL are coupled.

An alternating current Iin (hereinafter referred to as an "input current Iin") flows to the rectification circuit 203 from a single-phase alternating-current (AC) power source 1. The rectification circuit 203 performs full-wave rectification and filtering for allowing those in a low range to pass through (hereinafter expressed as "low-pass filtering") on the single-phase alternating-current voltage Vin to output a rectified voltage Vrf. The diode rectifier 2 performs the full-wave rectification. The LC filter 3 performs the low-pass filtering. It can also be said that the LC filter 3, in turn, the rectification circuit 203 performs the low-pass filtering on a current flowing to the charging-and-discharging circuit 4 to perform filtering for cutting off those in a high range in a current flowing to the single-phase AC power source 1.

The diode rectifier 2 includes diodes D21, D22, D23, and D24. The diodes D21, D22, D23, and D24 form a bridge circuit. The diode rectifier 2 in the direct-type power conversion circuit 100 has an input side to which the single-phase alternating-current voltage Vin is applied from the single-phase AC power source 1 and an output side. In the direct-type power conversion circuit 100, the diode rectifier 2 performs single-phase full-wave rectification on the single-phase alternating-current voltage Vin to acquire a voltage |Vin|, and outputs the voltage |Vin| as a voltage Vr from the output side of the diode rectifier 2.

The LC filter 3 includes a reactor L3 and a capacitor C3. In the direct-type power conversion circuit 100, the capacitor C3 is directly provided between the direct-current power source lines LH and LL. The capacitor C3 is, for example, a film capacitor. The reactor L3 cooperates with the capacitor C3 to perform the low-pass filtering described above.

The reactor L3 is coupled in series to the direct-current power source line LH or the direct-current power source line LL (in the direct-type power conversion circuit 100, to the direct-current power source line LH on the output side of the diode rectifier 2), and is more distant from the inverter 5 than the capacitor C3.

Although, in the direct-type power conversion circuit 100, the voltage Vr (in here, Vr = |Vin| is satisfied) that the diode rectifier 2 outputs is applied to the series coupling of the reactor L3 and the capacitor C3, the voltage Vr is applied to the capacitor C3 without interposing the reactor L3, depending on a configuration of the rectification circuit 203. Alternatively, the voltage Vr is applied to an input side of the charging-and-discharging circuit 4 (in such cases, Vr = |Vin| is not always satisfied). Such modifications of the rectification circuit 203 will be described later using direct-type power conversion circuits 100A, 100B, 100C, and 100D.

The diode rectifier 2 outputs a direct current I2 (hereinafter also referred to as an "output current I2"). In the direct-type power conversion circuit 100, the diode rectifier 2 is provided between the single-phase AC power source 1 and the LC filter 3, and the output current I2 and a current flowing to the reactor L3 coincide with each other.

The rectified voltage Vrf acquired by performing the low-pass filtering described above performed on the voltage |Vin| appears as a voltage V3 between both of terminals of the capacitor C3 (hereinafter also referred to as an "inter-terminal voltage"). A polarity of the inter-terminal voltage V3 coincides with a polarity of the voltage Vr. The rectified voltage Vrf pulses at cycles identical to cycles at which the voltage |Vin| pulses.

The charging-and-discharging circuit 4 includes a discharging circuit 4a, a charging circuit 4b, and a current blocking unit 4c. The discharging circuit 4a includes a capacitor C4 provided between the direct-current power source lines LH and LL, and has a function of allowing the capacitor C4 to discharge electricity.

Specifically, the discharging circuit 4a further includes a switch Sc. The switch Sc and the capacitor C4 are coupled in series between the direct-current power source lines LH and LL. It can be said that the capacitor C4 is provided between the direct-current power source lines LH and LL via the switch Sc. The switch Sc is provided more proximal to the direct-current power source line LH than the capacitor C4.

When the switch Sc becomes conductive, the capacitor C4 discharges electricity to the direct-current link 7, more specifically, to the direct-current power source lines LH and LL. A time ratio at which the switch Sc becomes conductive is temporarily referred to as a discharging duty dc. The discharging duty dc is controllable.

The switch Sc is achieved by using, for example, a diode D42 and a transistor (for example, insulated gate-type bipolar transistor) Qc coupled in anti-parallel to the diode D42. Note herein that the coupling in anti-parallel refers to coupling in parallel in which forward directions are opposite to each other. Specifically, the forward direction of the transistor Qc is a direction from the direct-current power source line LL to the direct-current power source line LH, and the forward direction of the diode D42 is a direction from the direct-current power source line LH to the direct-current power source line LL.

A voltage between both of terminals of the capacitor C4 will be hereinafter described as a capacitor voltage Vc. Since the capacitor voltage Vc is higher than the inter-terminal voltage V3, basically no current flows to the diode D42. Therefore, whether the switch Sc becomes conductive or non-conductive depends solely on whether the transistor Qc becomes conductive or non-conductive.

In the direct-type power conversion circuit 100, the charging circuit 4b boosts the rectified voltage Vrf appearing as the inter-terminal voltage V3 to charge the capacitor C4. For example, the charging circuit 4b includes a diode D40, a reactor L4, and a switch Sl.

The diode D40 includes a cathode and an anode, and the cathode is coupled between the switch Sc and the capacitor C4. The reactor L4 is coupled between the direct-current power source line LH and the anode of the diode D40. The switch Sl is coupled between the direct-current power source line LL and the anode of the diode D40.

The switch Sl is achieved by using, for example, a diode D41 and a transistor (for example, insulated gate-type bipolar transistor) Ql coupled in anti-parallel to the diode D41. Specifically, the forward direction of the transistor Ql is a direction from the direct-current power source line LH to the direct-current power source line LL, and the forward direction of the diode D41 is a direction from the direct-current power source line LL to the direct-current power source line LH.

Since the direct-current power source line LH is higher in potential than the direct-current power source line LL, basically no current flows to the diode D41. Therefore, whether the switch Sl becomes conductive or non-conductive depends solely on whether the transistor Ql becomes conductive or non-conductive.

The reactor L4 is coupled in series to the capacitor C4, on the output side of the rectification circuit 203. The capacitor C4 is charged by the charging circuit 4b, and the capacitor voltage Vc is higher than the rectified voltage Vrf. It can be said that the diode D40 is positioned on a high potential side of the capacitor C4 and is coupled between the reactor L4 and the capacitor C4. The forward direction of the diode D40 is a direction from the reactor L4 to the capacitor C4.

The reactor L4 is coupled in series to the capacitor C4 via the diode D40 coupled in series to the capacitor C4, on the output side of the rectification circuit 203. The reactor L4 is coupled in series to the switch Sl, on the output side of the rectification circuit 203. The switch Sl has a function of switching whether to allow a reactor current I4 flowing through the reactor L4 to flow to the capacitor C4 via the diode D40 when the switch Sl itself is turned off or to flow to the direct-current power source line LL when the switch Sl itself is turned on. Since the reactor current I4 flows from the direct-current power source line LH to the direct-current power source line LL, a polarity of the reactor current I4 is not reversed, and the reactor current I4 is therefore a direct current.

In below description, a current il flowing to the switch Sl is introduced. A period in which the switch Sl is turned off corresponds to a charging period during which the capacitor C4 is charged. The charging circuit 4b and the capacitor C4 form a known booster circuit. During the charging period of the capacitor C4, a charging current that decreases as time passes by flows to the capacitor C4, and the charging current is represented by a current (I4 - il). In a period in which the switch Sl is turned on, no current flows between the capacitor C4 and the switch Sl due to the function of the diode D40, the capacitor C4 is not charged, and the reactor current I4 and the current il are equal to each other.

The capacitor voltage Vc is larger than the inter-terminal voltage V3. The current blocking unit 4c is provided on the direct-current power source line LH or the direct-current power source line LL between the capacitors C3 and C4, and blocks a current flowing from the capacitor C4 to the capacitor C3. It is avoided that the capacitor voltage Vc receives an influence of the inter-terminal voltage V3.

The current blocking unit 4c is achieved by, for example, a diode D43. In the exemplification in Fig. 1, the diode D43 is provided on the direct-current power source line LH, and the forward direction of the diode D43 is a direction from the diode rectifier 2 to the inverter 5.

The inverter 5 converts a direct-current voltage Vdc generated between the direct-current power source lines LH and LL on a side closer to the inverter 5 than the charging-and-discharging circuit 4 into an alternating-current voltage. The alternating-current voltage is applied to an inductive load 6. For example, the alternating-current voltage is a three-phase alternating-current voltage, and is outputted to output terminals Pu, Pv, and Pw.

The inverter 5 forms a so-called voltage-type inverter. The inverter 5 includes six switching elements Sup, Svp, Swp, Sun, Svn, and Swn. The switching elements Sup, Svp, and Swp are respectively coupled between the output terminals Pu, Pv, and Pw and the direct-current power source line LH, and the switching elements Sun, Svn, and Swn are respectively coupled between the output terminals Pu, Pv, and Pw and the direct-current power source line LL.

The inductive load 6 is, for example, a rotating machine. By exemplifying a control system in which the inductive load 6 is regarded as a three-phase synchronous machine, for example, a speed detection unit 9 detects three-phase load currents iu, iv, and iw flowing to the inductive load 6, and provides a rotational angular velocity ωm, a q-axis current Iq, and a d-axis current Id acquired from the detected load currents to a control device (control circuit) 10.

In addition to the rotational angular velocity ωm, the q-axis current Iq, and the d-axis current Id, an amplitude Vm of the single-phase alternating-current voltage Vin, an angular velocity ω (alternatively, a phase θ = ωt, which is a product of the angular velocity ω and a time t), a command value ωm* for the rotational angular velocity, the capacitor voltage Vc and its command value Vc*, a command value Vdc* for the direct-current voltage Vdc, and a reactor voltage VL are inputted to the control device 10.

The reactor voltage VL is a temporal reference of a voltage applied to the reactor L3. As will be described later, the inter-terminal voltage V3 may be inputted to the control device 10 instead of the reactor voltage VL or, alternatively, together with the reactor voltage VL. The reactor L3 is provided between the diode rectifier 2 and the capacitor C3. The output current I2 flows to the reactor I2 from the diode rectifier 2, and, as for a polarity of the reactor voltage VL, a direction opposite to a direction in which the output current L3 flows, more specifically, a direction opposite to a direction of a component of the input current Iin supplied from the AC power source 1 in the output current I2 is adopted as positive.

### <Control Device 10>

A distribution ratio kb may be inputted to the control device 10. The distribution ratio kb is a ratio at which power to be supplied to the inverter 5 is distributed into power to be supplied from the charging-and-discharging circuit 4 and power to be supplied from the rectification circuit 203. The distribution ratio kb takes a value equal to or greater than 0 and equal to or smaller than 1. When the switch Sc is normally off, kb = 0 is satisfied. When the switch Sc is normally on, kb = 1 is satisfied. The distribution ratio kb is known and described as a distribution ratio k in PTL 1, for example.

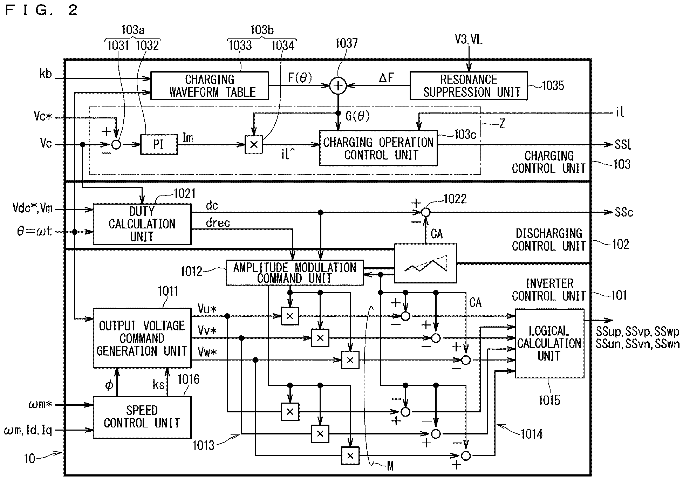

Fig. 2 is a block diagram exemplifying a configuration of the control device 10. The control device 10 includes an inverter control unit 101, a discharging control unit 102, and a charging control unit 103.

The inverter control unit 101 outputs inverter control signals SSup, SSvp, SSwp, SSun, SSvn, and SSwn based on the discharging duty dc, a rectification duty drec, and command values Vu*, Vv*, and Vw* for voltages that the inverter 5 outputs. The inverter control signals SSup, SSvp, SSwp, SSun, SSvn, and SSwn respectively control operations of the switching elements Sup, Svp, Swp, Sun, Svn, and Swn.

The inverter control unit 101 includes an output voltage command generation unit 1011, an amplitude modulation command unit 1012, a product-sum calculation unit 1013, a comparison unit 1014, a logical calculation unit 1015, and a speed control unit 1016.

In addition to the command value ωm*, the rotational angular velocity ωm, the q-axis current Iq, and the d-axis current Id are inputted to the speed control unit 1016 from the speed detection unit 9. The speed control unit 1016 calculates a modulation factor ks of the inverter 5 and a phase φ of each of three-phase voltages that the inverter 5 outputs, and outputs the calculated modulation factor and the calculated phase to the output voltage command generation unit 1011. The output voltage command generation unit 1011 uses the phases θ and φ and the modulation factor ks to calculate command values Vu*, Vv*, and Vw* for the three-phase voltages described above. The output voltage command generation unit 1011 and the speed control unit 1016 are known and described as an output voltage command generation unit 37 and a speed control unit 30, respectively, in Japanese Patent No. 7206491, for example.

The amplitude modulation command unit 1012 controls operation of the product-sum calculation unit 1013 based on the discharging duty dc and the rectification duty drec. A ratio between a period in which power is inputted from the rectification circuit 203 to the inverter 5 and a period in which power is inputted from the charging-and-discharging circuit 4 to the inverter 5 is equal to a ratio between the rectification duty drec and the discharging duty dc.

For example, also in both of a situation where all of the switching elements Sup, Svp, and Swp of the inverter 5 are turned on and all of the switching elements Sun, Svn, and Swn are turned off and a situation where all of the switching elements Sup, Svp, and Swp of the inverter 5 are turned off and all of the switching elements Sun, Svn, and Swn are turned on, no power is inputted to the inverter 5 from both of the rectification circuit 203 and the charging-and-discharging circuit 4. Assuming that a period in such a situation is temporarily referred to as a zero period, a time ratio corresponding to the zero period is acquired as a time ratio acquired by subtracting a sum of the rectification duty drec and the discharging duty dc from 1.

The product-sum calculation unit 1013 (although symbols of multipliers are only indicated for simplicity) performs product-sum calculations of the command values Vu*, Vv*, and Vw*, the discharging duty dc, and the rectification duty drec to generate signal waves M. The comparison unit 1014 outputs results of comparisons between the signal waves M and a carrier CA to the logical calculation unit 1015. The logical calculation unit 1015 performs logical calculations on the results of the comparisons to output inverter control signals SSup, SSvp, SSwp, SSun, SSvn, and SSwn.

A technique itself for outputting the inverter control signals SSup, SSvp, SSwp, SSun, SSvn, and SSwn using the command values Vu*, Vv*, and Vw*, the rectification duty drec, the discharging duty dc, and the carrier CA as described above is known from PTL 1, for example.

The discharging control unit 102 includes a duty calculation unit 1021 and a comparator 1022. As the phase θ (= ωt), the amplitude Vm, the capacitor voltage Vc, and the command value Vdc* are inputted, the duty calculation unit 1021 generates a discharging duty dc and a rectification duty drec. The comparator 1022 compares the discharging duty dc with the carrier CA to generate a discharging switch signal SSc for allowing the switch Sc to become conductive. A technique itself for generating a discharging duty dc, a rectification duty drec, and a discharging switch signal SSc by using the phase θ (= ωt), the amplitude Vm, the capacitor voltage Vc, and the carrier CA as described above is known from PTL 1, for example.

### <Charging of Capacitor C4>

The charging control unit 103 includes an amplitude determination unit 103a, a charging command generation unit 103b, a charging operation control unit 103c, a resonance suppression unit 1035, and an adder 1037.

The amplitude determination unit 103a includes a subtractor 1031 and a proportional-integral controller 1032. The subtractor 1031 acquires a difference between the capacitor voltage Vc and the command value Vc*. The proportional-integral controller 1032 performs integral control or, alternatively, proportional-integral control on the difference to determine an amplitude Im. Operation itself of the amplitude determination unit 103a is also known from PTL 1, for example.

The charging command generation unit 103b includes a charging waveform table 1033 and a multiplier 1034. As the distribution ratio kb and the phase θ (= ωt) are inputted, the charging waveform table 1033 outputs a function F(θ) (= F(ωt)) related to the phase θ. The adder 1037 adds the function F(θ) and a variation ΔF, and outputs a function G(θ) = F(θ) + ΔF. It can be said that the function G(θ) takes a value acquired by adding the variation ΔF to the function F(θ). The variation ΔF will be described later in detail.

The multiplier 1034 multiplies the amplitude Im by the function G(θ) to determine an upper limit value il^ for the current il.

The function F(θ) determines the current il by setting the upper limit value il^ when resonance of the LC filter 3 is not taken into consideration. The function F(θ) does not depend on both of the reactor voltage VL and the inter-terminal voltage V3. A value acquired by multiplying the function F(ωt) variously exemplified in PTL 1, for example, by an absolute value |sinθ| of a sine value sinθ of the phase θ is adopted as the function F(θ) in this embodiment.

PTL 1 exemplifies a case where a period in which the switch Sl is turned on is determined, and the reactor current I4 is controlled based on this period. In this embodiment, the reactor current I4 is controlled by the upper limit value il^, instead of the period in which the switch Sl is turned on. Since, while the switch Sl is turned on, the voltage Vr applied to the reactor L4 is proportional to |sinθ|, the period in which the switch Sl is turned on, which is introduced in PTL 1, is converted into the current il in the present embodiment, and the converted current il is taken into consideration. From a viewpoint of this conversion, it is possible to adopt, as the function F(θ) in this embodiment, one acquired by multiplying the function F(ωt) exemplified in PTL 1 by the absolute value |sinθ|. Specifically, for example:
the discharging duty dc is zero in a period in which a cosine value cos(2θ) of a value 2θ that is twice the phase θ is negative or zero;
in a period in which the cosine value cos(2θ) is positive, the discharging duty dc takes a value proportional to the cosine value cos(2θ), more specifically, a product (Vdc* / Vc) ·cos(2θ) of a ratio (Vdc* / Vc) of the command value Vdc* with respect to the capacitor voltage Vc (hereinafter also referred to as a "first voltage ratio") and the cosine value cos(2θ); and
the function F(θ) takes a product [1 - (2·sin²θ)⁻¹]·|sinθ| of a value [1 - (2·sin²θ)⁻¹] acquired by subtracting a half value (2·sin²θ)⁻¹of an inverse number of a square sin²θ of a sine value of the phase θ from 1 and an absolute value |sinθ|.

Alternatively, for example:
the discharging duty dc takes a value proportional to a square cos²θ of a cosine value cos(θ) of the phase θ, more specifically, a product of a first voltage ratio (Vdc* / Vc) and a square cos²θ of the cosine value cos(θ); and
the function F(θ) takes a value [1 + (1 - kb) ·cos(2θ)]·|sinθ| / 2 acquired by multiplying a value [1 + (1 - kb) ·cos(2θ)] / 2 acquired by adding 1/2 to a half value of a product (1 - kb) ·cos(2θ) of a cosine value cos(2θ) that is twice the phase θ and a coefficient (1 - kb) by an absolute value |sinθ|. Note herein that the coefficient (1 - kb) is a value acquired by subtracting the distribution ratio kb from 1, and takes a value equal to or greater than 0 and equal to or smaller than 1.

Alternatively, for example, it is possible to set the function F(θ) as described below to increase the first voltage ratio. Specifically, for example:
the discharging duty dc is zero in a period in which a cosine value cos(2θ) of a value 2θ that is twice the phase θ is negative or zero;
in a period in which the cosine value cos(2θ) is positive, the discharging duty dc takes a value proportional to the cosine value cos(2θ), more specifically, a product (Vm / Vc) ·cos(2θ) of a ratio (Vm / Vc) of the amplitude Vm with respect to the capacitor voltage Vc (hereinafter also referred to as a "second voltage ratio") and the cosine value cos(2θ); and
the function F(θ) takes a product (kb·π/√8) ·[1 - (2 ·sin²θ)⁻¹]·|sinθ|of a value [1 - (2·sin²θ)⁻¹] acquired by subtracting a half value (2·sin²θ)⁻¹of an inverse number of a square sin²θ of a sine value of the phase θ from 1, the distribution ratio kb, the coefficient π/√8, and an absolute value |sinθ|.

Alternatively, for example, it is possible to set the function F(θ) based on values disclosed in Japanese Patent No. 6418287 to increase the direct-current voltage Vdc higher than the amplitude Vm (hereinafter also referred to as "boost control"). Specifically, for example:
the discharging duty dc takes a value (1 - B) acquired by subtracting a value B described later from 1; and
the function F(θ) takes a value (|sinθ| - B·J) acquired by subtracting a product B·J of the value B and a value J described later from an absolute value |sinθ| of a sine value of the phase θ.

The value B is a ratio (Vdc* - Vc) / (Vrec - Vc) of a value (Vdc* - Vc) acquired by subtracting the capacitor voltage Vc from the command value Vdc* with respect to a value (Vrec - Vc) acquired by subtracting the capacitor voltage Vc from the voltage Vrec acquired by performing the full-wave rectification on the single-phase alternating-current voltage Vin (which is acquired as a product Vm·|sinθ|of the amplitude Vm and an absolute value |sinθ|).

The value J is a product of a half value [1 - (1 - kb)·cos(2θ)] / 2 of a value acquired by subtracting a product (1 - kb)·cos(2θ) of a cosine value cos(2θ) that is twice the phase θ and the coefficient (1 - kb) from 1 and a third voltage ratio (Vm / Vdc*).

The third voltage ratio (Vm / Vdc*) is a ratio of the amplitude Vm with respect to the command value Vdc*.

### <Variation ΔF>

The variation ΔF is outputted from the resonance suppression unit 1035. The variation ΔF functions as a correction term for the function F(θ).

For example, the reactor voltage VL is inputted to the resonance suppression unit 1035. The resonance suppression unit 1035 calculates a value (-kL·VL) proportional to the reactor voltage VL, and outputs the value as the variation ΔF (kL > 0). A technique itself for correcting the reactor current I4 by using such a variation ΔF as described above to reduce an influence of resonance of the LC filter 3 is known from Japanese Patent No. 5920520, for example.

For example, the inter-terminal voltage V3 is inputted to the resonance suppression unit 1035. The resonance suppression unit 1035 calculates a value kc·73 proportional to the inter-terminal voltage V3, and outputs the value as the variation ΔF (kc > 0). A technique itself for correcting the reactor current I4 by using such a variation ΔF as described above to reduce an influence of resonance of the LC filter 3 is known from Japanese Patent No. 6772577, for example.

In the present embodiment, the variation ΔF is generated depending on one or both of the reactor voltage VL and the inter-terminal voltage V3. For example, coefficients kc0 and kL0 that are both non-negative are introduced, and the variation ΔF is calculated by using a value kc0·V3 - kL0·VL (however, kc0 + kL0 ≠ 0, and kL0 = kL when kc0 = 0 and kc0 = kc when kL0 = 0). The variation ΔF increases as the reactor voltage VL decreases. The variation ΔF increases as the inter-terminal voltage V3 increases.

The charging operation control unit 103c controls operation of the charging circuit 4b based on the current il and the upper limit value il^. More specifically, the charging operation control unit 103c generates a charging switch signal SSl allowing the switch Sl to be turned on until the current il reaches the upper limit value il^.

When the switch Sl is turned on, the reactor current I4 wholly serves as the current il and flows through the switch Sl. When the switch Sl is turned on, the current il increases, and, when the current il reaches the upper limit value il^, the charging switch signal SSl turns off the switch Sl. When the switch Sl is turned off, the reactor current I4 is wholly used to charge the capacitor C4. Therefore, the upper limit value il^ is regarded as an upper limit for the current il and is also regarded as an upper limit for the reactor current I4.

In the present embodiment, the charging operation control unit 103c functions as a mode modulation unit that allows the reactor current I4 to flow to the charging circuit 4b in a mode including a continuous mode. Specifically, when the current il is positive, the charging switch signal SSl turns on the switch Sl, allowing the reactor current I4 to flow in the continuous mode. PTL 1 exemplifies a case where the charging circuit 4b operates in a critical mode.

A block Z includes the amplitude determination unit 103a, the multiplier 1034, and the charging operation control unit 103c. For example, the block Z is achieved by using a so-called linear integrated circuit (IC).

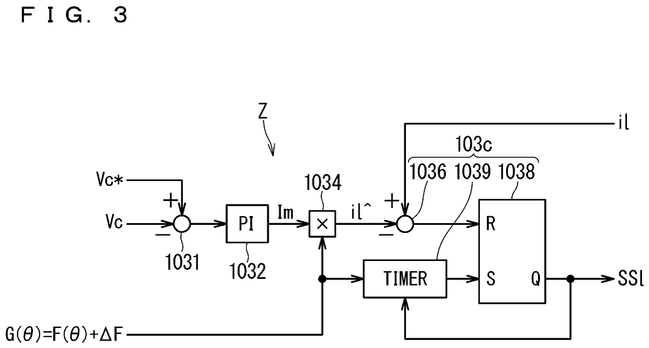

Fig. 3 is a block diagram exemplifying a configuration of the block Z. The charging operation control unit 103c includes, for example, a comparator 1036, a timer 1039, and a flip-flop 1038.

The flip-flop 1038 has a reset input terminal R, a set input terminal S, and an output terminal Q. A potential at the output terminal Q is maintained at a value corresponding to a first logical value until a potential at the reset input terminal R rises after a potential at the set input terminal S rises. The potential at the output terminal Q is maintained at a value corresponding to a second logical value until the potential at the set input terminal S rises after the potential at the reset input terminal R rises. The potential at the output terminal Q functions as the charging switch signal SSl. For example, the potential corresponding to the first logical value is a potential for turning on the transistor Ql, and the potential corresponding to the second logical value is a potential for turning off the transistor Ql.

The comparator 1036 outputs, to the reset input terminal R, a potential indicating that a value (il - il^) acquired by subtracting the upper limit value il^ from the current il is not negative.

The timer 1039 is, for example, an up-counter that generates a count value that increases as time passes by. As the function G(θ) = F(θ) + ΔF is inputted to the timer 1039, the timer 1039 functions as the up-counter that increases the count value to the function G(θ).

The output terminal Q is coupled to the timer 1039. The count value of the timer 1039 is reset when the potential at the output terminal Q transitions from the value corresponding to the second logical value to the value corresponding to the first logical value.

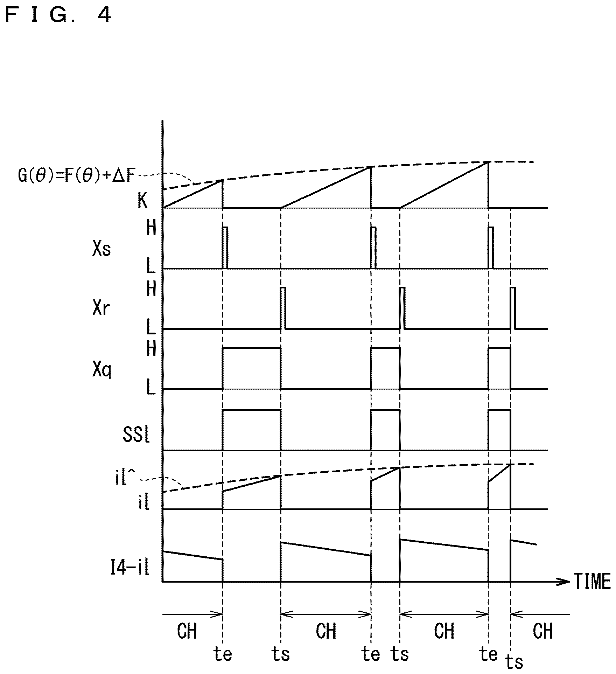

Fig. 4 is a graph schematically exemplifying operation of the charging operation control unit 103c. In the graph, a horizontal axis indicates time, and indicates a charging period CH in which the capacitor C4 is charged and a start point ts and an end point te of the charging period CH.

In the graph illustrated in Fig. 4, a vertical axis indicates a count value K, a binary logic Xs, a binary logic Xr, a binary logic Xq, the charging switch signal SSl, the currents il and (I4 - il), and the upper limit value il^.

The binary logic Xs corresponds to the potential at the set input terminal S. A state where the potential is high corresponds to activation of the binary logic Xs, and a state where the potential is low corresponds to inactivation of the binary logic Xs. The binary logic Xr corresponds to the potential at the reset input terminal R. A state where the potential is high corresponds to activation of the binary logic Xr, and a state where the potential is low corresponds to inactivation of the binary logic Xr. The binary logic Xq corresponds to the potential at the output terminal Q. A state where the potential is high corresponds to activation of the binary logic Xq, and a state where the potential is low corresponds to inactivation of the binary logic Xq. For example, the switch Sl is turned on when the charging switch signal SSl takes a high potential, and the switch Sl is turned off when the charging switch signal SSl takes a low potential.

In the present embodiment, a state of activation and a state of inactivation of each of the binary logics Xs, Xr, and Xq are respectively described to correspond to a logical value "H" and a logical value "L". The combination of activation and inactivation of the binary logic Xs, the potential at the set input terminal S, and the combination of the logical values "H" and "L" are not limited to the exemplification described above. The combinations related to the binary logics Xr and Xq match the combination related to the binary logic Xs. In a case where the switch Sl is turned off when the charging switch signal SSl takes the high potential and the switch Sl is turned on when the charging switch signal SSl takes the low potential, for example, the potential at the output terminal Q when the binary logic Xq is active is lower than the potential at the output terminal Q when the binary logic Xq is inactive.

The count value K is reset at a point in time when the binary logic Xq transitions from inactive to active. The point in time corresponds to the end point te. The count value K increases as time passes by from a point in time when the binary logic Xq transitions from active to inactive. The point in time corresponds to the start point ts.

When the count value K reaches a predetermined value, the timer 1039 outputs a potential corresponding to the logical value "H" to the set input terminal S. It can also be said that the timer 1093 has activated the binary logic Xs.

As the binary logic Xs transitions from inactive to active, the binary logic Xq transitions from inactive to active, and the charging switch signal SSl turns on the switch Sl. As the switch Sl is turned on, the reactor current I4 does not flow to the capacitor C4.

The binary logic Xq becomes active from inactive, the timer 1039 is reset, and the count value K that has been increased also stops. As a result, the binary logic Xs becomes inactive, and activation of the binary logic Xs occurs in a pulsed manner.

A point in time at which the count value K reaches the predetermined value is the end point te. It can be said that the predetermined value determines the end point te. By taking into consideration that the count value K is once reset at the end point te and then starts to increase at the start point ts, it can also be said that the predetermined value determines the charging period CH.

The predetermined value is determined by the function G(θ) and an increasing speed of the count value K. Fig. 4 exemplifies a case where the predetermined value is the function G(θ). In this case, for example, an increment of the count value K per unit time is 1. When the increment of the count value K per unit time is N, the predetermined value is set to one acquired by multiplying the function G(θ) by N, and the charging period CH is determined in an identical manner to the exemplification described above. From those described above, it can be said that the charging period CH is proportional to the function G(θ). Since the variation ΔF is set as described above, it can be said that the charging period CH increases as the reactor voltage VL decreases and the inter-terminal voltage V3 increases.

The function G(θ) is a sum of the function F(θ) related to the phase θ and the variation ΔF. The function F(θ) is a periodic function that is set as described above, and it is not necessary to assume that the reactor current I4 is zero as a prerequisite. Due to such setting of the end point te as described above, the reactor current I4 flows in modes including not only the critical mode but also the continuous mode.

It can be said that a current to be inputted to the charging circuit 4b is the reactor current I4, and the charging circuit 4b chops the reactor current I4 through switching using the switch Sl to charge the capacitor C4.

When an influence of the variation ΔF is ignored, a value (hereinafter temporarily referred to as a "normalized value") acquired by dividing an average value of the reactor current I4 at a cycle (which can also be referred to as a switching cycle of the switch Sl) Tsw of chopping by a maximum value of the average value corresponds to the function F(θ). The predetermined value related to a point in time at which the count value K is reset is also based on the function F(θ), and the charging period CH decreases as the normalized value decreases. By taking into consideration the influence of the variation ΔF, the charging period CH increases as the reactor voltage VL decreases, and the charging period CH increases as the inter-terminal voltage V3 increases.

In below description, control for allowing the reactor current I4 to flow in accordance with the critical mode is temporarily referred to as "critical mode control", and control for allowing the reactor current I4 to flow in accordance with the continuous mode in areas except for an area in a vicinity of a boundary phase is temporarily referred to as "continuous mode control". Note herein that the "area in the vicinity of a boundary phase" is a temporal reference of a phase period in which a phase θ at which the function F(θ) becomes 0 and its peripheral phases θ are gathered. In the area in the vicinity of the boundary phase, the reactor current I4 may flow in a discontinuous mode.

While the switch Sl is turned on, the current il increases at a speed derived from an inductance that the reactor L4 has. When the current il reaches the upper limit value il^, the comparator 1036 outputs a potential corresponding to the logical value "H" to the reset input terminal R. It can also be said that the comparator 1036 has activated the binary logic Xr.

As the binary logic Xr transitions from inactive to active, the binary logic Xq transitions from active to inactive, and the charging switch signal SSl turns off the switch Sl. As the switch Sl is turned off, the reactor current I4 flows to the capacitor C4, and a value of the current il becomes zero. As a result, the binary logic Xr becomes inactive, and activation of the binary logic Xr occurs in a pulsed manner.

A point in time at which the current il reaches the upper limit value il^ is the start point ts. It can be said that the upper limit value il^ determines the start point ts.

Techniques themselves for setting a flip-flop using counting up of a timer, resetting the timer using the setting, and resetting the flip-flop when a current corresponding to the current il reaches an upper limit value that depends on a phase is known from US Patent No. 7279876, US Patent No. 8270190, and a data sheet of a product L4984D of STMicroelectronics (see https://www.st.com/resource/en/datasheet/l4984d.pdf), for example. In the latter two publications, which also disclose a technique in which a predetermined value that determines counting up of a timer depends on a phase of a power source voltage, an amount corresponding to the variation ΔF is not taken into consideration also for resonance due to a filter that performs low-pass filtering.

In the present embodiment, the predetermined value related to the count value K is set as described above by using the function G(θ). The upper limit value il^ also depends on the variation ΔF, identical or similar to the predetermined value. In accordance with those described above, the predetermined value and the upper limit value il^ increase, causing both of the start point ts and the end point te to delay, as the reactor voltage VL decreases and the inter-terminal voltage V3 increases. By focusing on the phase θ in this delay, it can be said that both of the start point ts and the end point te shift toward a delay phase side with respect to the phase θ, as the reactor voltage VL decreases and the inter-terminal voltage V3 increases. The charging period CH is, for example, a period in which the count value K increases from 0 to a value proportional to the function G(θ), and the charging period CH has a duration that is set depending on the phase θ without depending on the amplitude Im.

In the present embodiment, the start point ts and the end point te of the charging period CH are determined in this manner. There is a period in which the reactor current I4 flows in the continuous mode.

When the function G(θ) exemplified as described above is adopted, it is not necessary to assume that the input current Iin indicates a sine wave as a prerequisite. In PTL 1, for example, description in which setting a power factor to 1 is taken into consideration is provided. However, PTL 1 exemplifies control in the critical mode, and, when the continuous mode control is performed, identical or similar to the present embodiment, it is also assumed that the reactor current I4 flows in the discontinuous mode in an area in the vicinity of a boundary phase, and, therefore, it is also assumed that the input current Iin indicates a wave distorted from the sine wave.

### <Reduction of Higher Harmonic Wave>

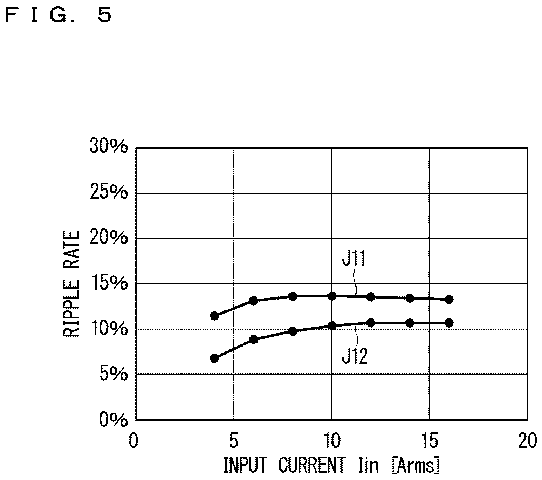

Effects of reflecting the variation ΔF not only in the start point ts but also in the end point te will now be illustrated herein through descriptions using Figs. 5, 6, and 7. For simplicity in description, operation of the charging-and-discharging circuit 4 in a situation where the switch Sc is turned on will be exemplified. Since the capacitor voltage Vc is higher than the inter-terminal voltage V3, and the reactor L4 and the capacitor C4 are not directly coupled to each other, it is possible to regard that, due to the function of the current blocking unit 4c, the charging-and-discharging circuit 4 functions as a known power factor correction circuit. To simplify an influence of the variation ΔF, |sinθ| is adopted as the function F(θ) for convenience, and an absolute value of a sine wave (ninth-degree higher harmonic wave) having a frequency (ninth-degree component) that is nine times a frequency of the input current Iin is adopted as the variation ΔF.

In this way, when a value that does not depend on the reactor voltage VL and the capacitor voltage Vc is virtually adopted as the variation ΔF, it is possible to regard the variation ΔF as a disturbance with respect to the function F(θ) adopted for determining the current il when no influence of resonance of the LC filter 3 is taken into consideration.

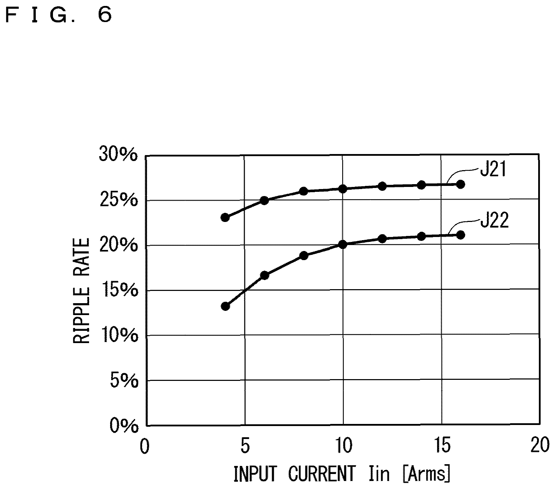

Fig. 5 is a graph exemplifying a relationship between the input current Iin and a ripple rate when the variation ΔF is 0.125 × |sin(90)|. Fig. 6 is a graph exemplifying a relationship between the input current Iin and a ripple rate when the variation ΔF is 0.25 × |sin(9θ)|. Also in both of Figs. 5 and 6, a horizontal axis indicates an effective value of the input current Iin, and the effective value corresponds to a value that is 1/√2 times of the amplitude Im. Also in both of Figs. 5 and 6, a vertical axis indicates a ripple rate, and the ripple rate is a percentage of the ninth-degree higher harmonic wave in the input current Iin.

A polygonal line J11 illustrated in Fig. 5 and a polygonal line J21 illustrated in Fig. 6 both indicate the relationships described above in a case where the variation ΔF is reflected only in setting of the start point ts and the variation ΔF is not reflected in setting of the end point te. According to Fig. 3, it can be said that this case corresponds to a case where the function F(θ) is inputted to the timer 1039, instead of the function G(θ).

A polygonal line J12 illustrated in Fig. 5 and a polygonal line J22 illustrated in Fig. 6 both indicate the relationships described above in a case where the variation ΔF is reflected not only in setting of the start point ts but also in setting of the end point te. According to Fig. 3, this case corresponds to a case where the function G(θ) is inputted to the timer 1039, as illustrated.

The polygonal line J12 is lower in ripple rate than the polygonal line J11, and the polygonal line J22 is lower in ripple rate than the polygonal line J21.

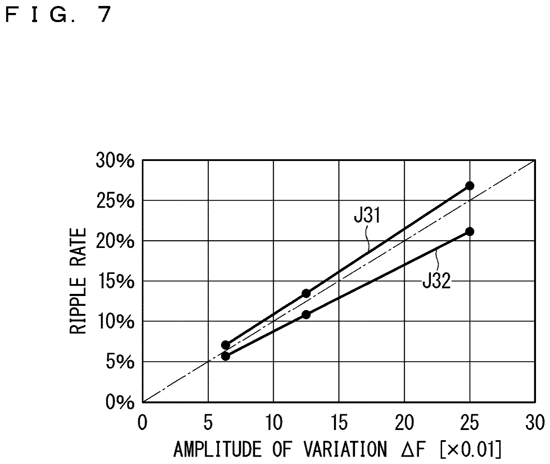

Fig. 7 is a graph exemplifying a relationship between an amplitude of the variation ΔF and a ripple rate when the effective value described above is 16 [Arms]. A polygonal line J31 indicates the relationship described above in a case where the variation ΔF is reflected only in setting of the start point ts and the variation ΔF is not reflected in setting of the end point te. A polygonal line J32 indicates the relationship described above in a case where the variation ΔF is reflected not only in setting of the start point ts but also in setting of the end point te.

A plot when an amplitude of the variation ΔF is 0.125 on the polygonal line J31 corresponds to a plot when the input current Iin is 16 [Arms] on the polygonal line J11 illustrated in Fig. 5. A plot when the amplitude of the variation ΔF is 0.25 on the polygonal line J31 corresponds to a plot when the input current Iin is 16 [Arms] on the polygonal line J21 illustrated in Fig. 6.

A plot when the amplitude of the variation ΔF is 0.125 on the polygonal line J32 corresponds to a plot when the input current Iin is 16 [Arms] on the polygonal line J12 illustrated in Fig. 5. A plot when the amplitude of the variation ΔF is 0.25 on the polygonal line J32 corresponds to a plot when the input current Iin is 16 [Arms] on the polygonal line J22 illustrated in Fig. 6.

In Fig. 7, a case where a value of a percentage of the amplitude of the variation ΔF with respect to the amplitude Im is equal to a value of a percentage of the ripple rate is added in a form of a chain line. The polygonal line J32 is positioned below the chain line, and a change rate of an average of the ripple rate with respect to the amplitude of the variation ΔF (this appears, when the polygonal line J32 is approximated with a straight line in Fig. 7, as an inclination of the straight line) is approximately 0.85. A fact that the value 0.85 is smaller than 1 indicates a decrease in gain related to the variation ΔF. The decrease is derived from a rapid change in the variation ΔF in the area in the vicinity of a boundary phase.

In the area in the vicinity of the boundary phase, the reactor current I4 is small, and there is a region in which the upper limit value il^ is negative in calculation. In that region, the reactor current I4 does not actually flow, and a period in which the reactor current I4 flows in the discontinuous mode occurs in the area in the vicinity of the boundary phase, which leads to the decrease in gain as described above. However, it is possible to reduce such a decrease by correcting coefficients kc and kL in the resonance suppression unit 1035.

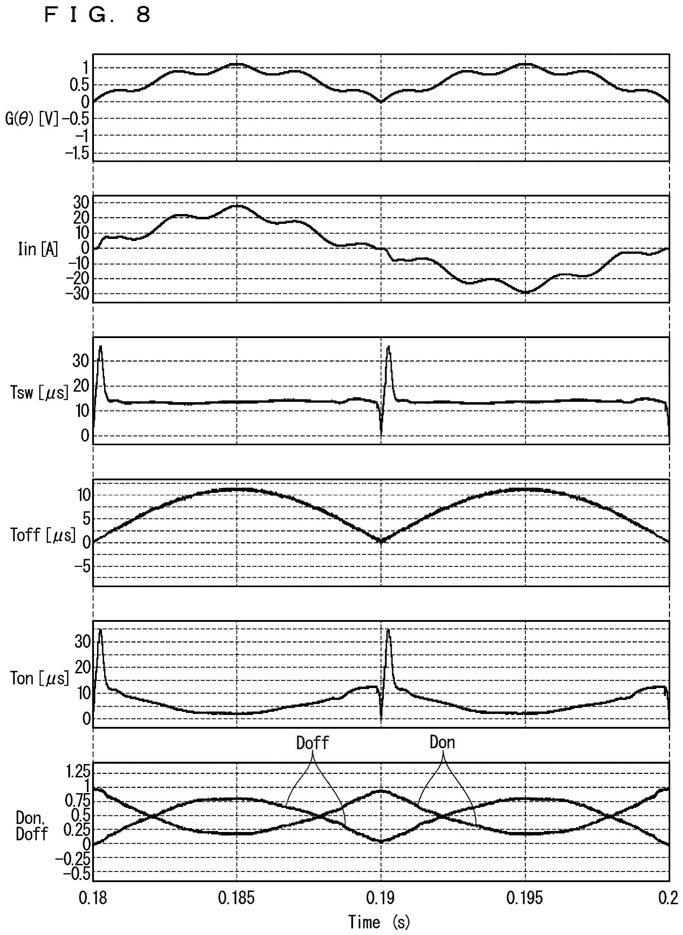

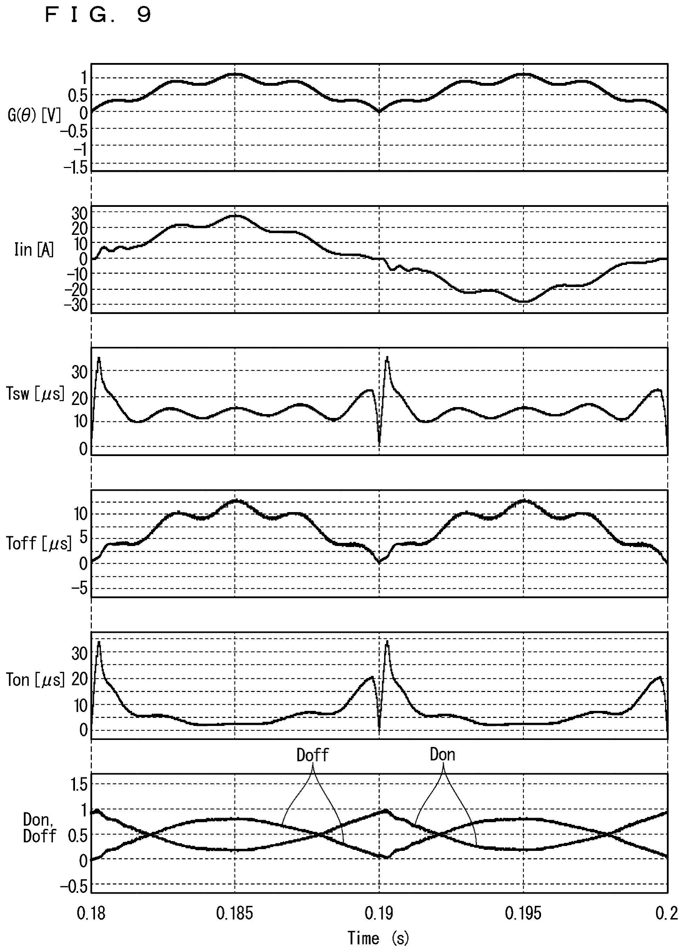

Both of Figs. 8 and 9 are graphs exemplifying chronological changes of the function G(θ), the input current Iin, the cycle Tsw, an off period Toff, an on period Ton, and time ratios Don and Doff.

As the function G(θ), a sum of the function F(θ) and the variation ΔF = 0.125 × |sin(9θ)| is adopted. The input current Iin includes a ninth-degree higher harmonic wave component. The cycle Tsw is a sum of the off period Toff and the on period Ton. The off period Toff is a period in which the switch Sl is continuously turned off. The off period Toff corresponds to the charging period CH. The on period Ton is a period in which the switch Sl is continuously turned on. In the on period Ton, the reactor current I4 increases. The time ratio Don is a ratio of the on period Ton with respect to the cycle Tsw. The time ratio Doff is a ratio of the off period Toff with respect to the cycle Tsw.

Fig. 8 illustrates a case where the variation ΔF is reflected only in setting of the start point ts, and the variation ΔF is not reflected in setting of the end point te. According to Fig. 3, it can be said that this case corresponds to a case where the function F(θ) is inputted to the timer 1039, instead of the function G(θ). Therefore, the off time Toff does not receive an influence of the variation ΔF, and is controlled to be constant with respect to the phase θ based on the function F(θ).

A time constant of the proportional-integral controller 1032 is significantly large, compared with the cycle Tsw. Therefore, the on time Ton is controlled to instantaneously in response to the upper limit value (il^) in accordance with the variation ΔF inputted to the multiplier 1034.

Fig. 9 illustrates a case where the variation ΔF is reflected not only in setting of the start point ts but also in setting of the end point te. According to Fig. 3, this case corresponds to a case where the function G(θ) is inputted to both of the multiplier 1034 and the timer 1039, as illustrated. A response corresponding to the variation ΔF inputted to the multiplier 1034 is identical or similar to that described with reference to Fig. 8. However, the off time Toff pulses in proportion to the variation ΔF in addition to a constant value due to the function F(θ) as an influence of the variation ΔF is received. On the other hand, from a relationship between the single-phase alternating-current voltage Vin and the capacitor voltage Vc, the time ratios Don and Doff are controlled to be constant with respect to the phase regardless of the variation ΔF. Therefore, the on time Ton promptly responds to the pulsation of the off time Toff, and the cycle Tsw varies to absorb the pulsation.

It can be seen from Figs. 8 and 9 that, as the multiplier 1034 and the charging operation control unit 103c operate by using the function G(θ), an influence of the variation ΔF on a waveform of the input current Iin is at a substantially identical or similar level, regardless of whether or not the variation ΔF is reflected in setting of the end point te, and an influence of resonance of the LC filter 3 is reduced due to a command of the resonance suppression unit 1035.

When the continuous mode control is performed, the input current Iin indicates a wave distorted from a sine wave, identical or similar to the assumption described above. The distortion is particularly large in an area in the vicinity of the boundary phase. When the variation ΔF is reflected in both of setting of the start point ts and setting of the end point te (see Fig. 9), the switching frequency fsw (inverse number of the cycle Tsw exemplified in Figs. 8 and 9) decreases in an area in the vicinity of the boundary phases (at a point in time when the time Time is 0.19 s in Figs. 8 and 9 and in an area in the vicinity of the point in time), and, in the discontinuous mode, there is a large influence that distorts the input current Iin, compared with a case where the variation ΔF is reflected only in setting of the start point ts and the variation ΔF is not reflected in setting of the end point te (see Fig. 8). In a case where the variation ΔF is not reflected in setting of the end point te, a variation of the switching frequency fsw is small and, in the discontinuous mode, there is also a small influence that distorts the input current Iin, compared with a case where there is no delay in control of the end point te and the variation ΔF is reflected also in setting of the end point te.

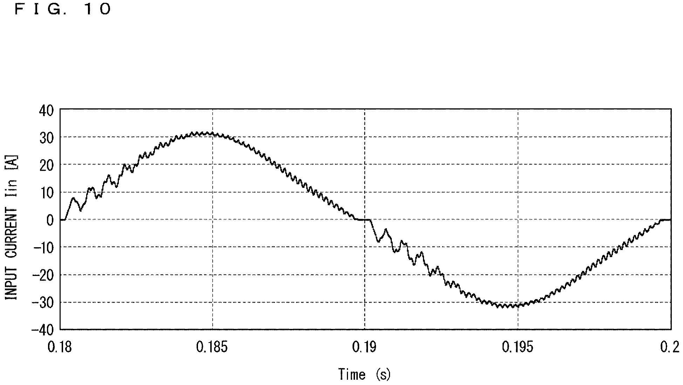

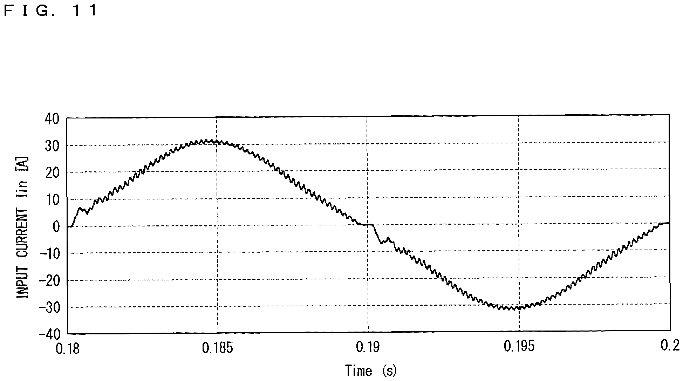

Figs. 10 and 11 are graphs exemplifying waveforms of the input current Iin when the continuous mode control is adopted in the direct-type power conversion circuit 100. Figs. 10 and 11 exemplify a case where kL = 0 is satisfied and a case where kL = 0.015 is satisfied, respectively. Other conditions than the coefficient kL are identical in both of the case exemplified in Fig. 10 and the case exemplified in Fig. 11. For example, a voltage value (effective value) of the single-phase alternating-current voltage Vin is 200 V, its cycle is 0.02 seconds (= 1/50 Hz), power inputted to the direct-type power conversion circuit 100 is 4 kW, a frequency of the carrier CA is 5.9 kH, and a cut-off frequency of the LC filter 3 is 1.75 kHz.

As Figs. 10 and 11 are compared with each other, it can be seen that a higher harmonic wave of the input current Iin is suppressed even when the continuous mode control is adopted.

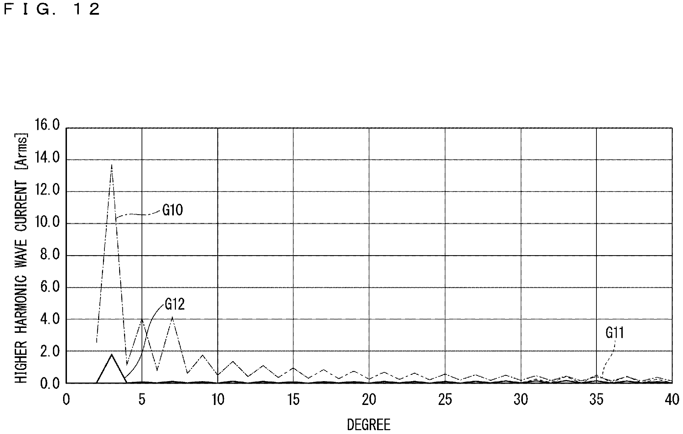

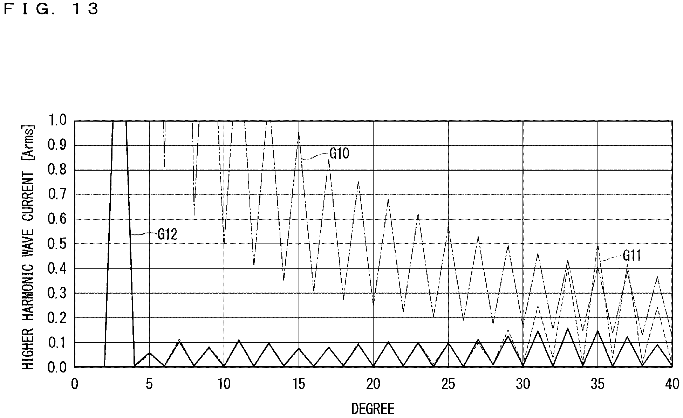

Figs. 12 and 13 are graphs each exemplifying a relationship between a degree of a higher harmonic wave component and a higher harmonic wave current (more specifically, an effective value [Arms] of an amplitude) when a frequency of the single-phase alternating-current voltage Vin is regarded as a fundamental frequency. Figs. 12 and 13 each exemplify a case where the continuous mode control is adopted in the direct-type power conversion circuit 100. Fig. 13 illustrates in an enlarged manner a region where the higher harmonic wave current is small in the graph illustrated in Fig. 12.

Also in both of Figs. 12 and 13, a polygonal line G10 indicates a limit value according to a standard JISC61000-3-2 (equal to or smaller than 300 V, 20 A/phase), a polygonal line G11 indicates a higher harmonic wave component of the input current Iin exemplified in Fig. 10, and a polygonal line G12 indicates a higher harmonic wave component of the input current Iin exemplified in Fig. 11.

In Fig. 12, the polygonal lines G11 and G12 appear to be substantially identical to each other, and both of the polygonal lines appear to indicate values lower than those of the polygonal line G10. Distortion of the input current Iin in the situation where the switch Sc is turned on, which has been described with reference to Figs. 8 and 9, is also small. It can be seen, from that displayed in an enlarged manner in Fig. 13, that the polygonal line G12 is smaller than the polygonal line G11 in degrees equal to or higher than a 30th degree. In particular, it can be seen that the polygonal line G12 greatly deviates from the polygonal line G11 in a 35th degree. From those described above, it is found that a magnitude of the higher harmonic wave component in the input current Iin does not satisfy the standard JISC61000-3-2 when kL = 0, that is, substantially G(θ) = F(θ) is satisfied. When the variation ΔF is taken into consideration as kL = 0.015, on the other hand, the polygonal line G12 indicates values smaller than those of the polygonal line G10, and it is found that the standard JISC61000-3-2 is satisfied.

### <Improvement in Efficiency>

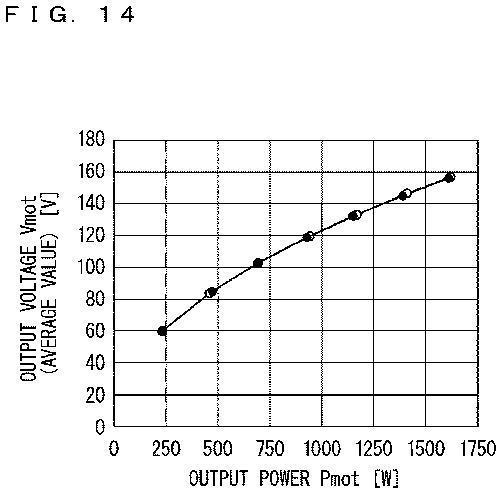

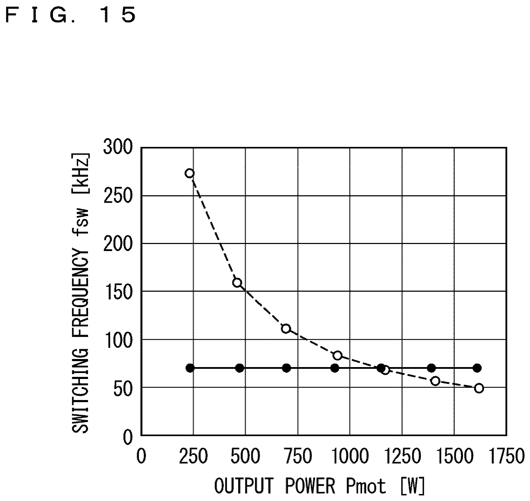

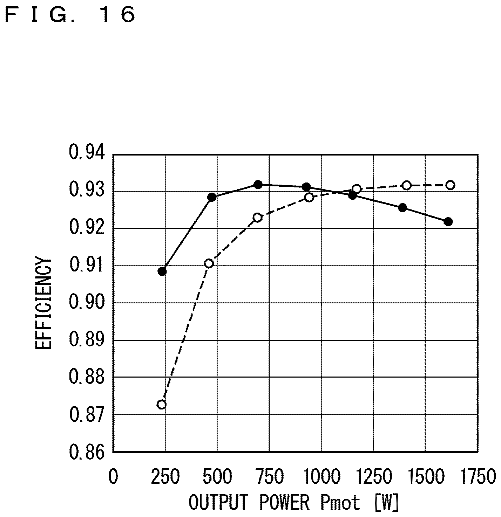

Fig. 14 is a graph exemplifying a relationship between output power Pmot [W] from the inverter 5 and an average value of an output voltage Vmot [V] from the inverter 5. Fig. 15 is a graph exemplifying a relationship between the output power Pmot [W] and the switching frequency fsw of the switch Sl (which can also be said to be an inverse number of the cycle Tsw of chopping in the charging-and-discharging circuit 4). Fig. 16 is a graph exemplifying a relationship between the output power Pmot [W] and efficiency of the direct-type power conversion circuit 100.

However, for simplicity in description, a case where a state where the switch Sc is turned on is maintained is exemplified. In this case, the charging-and-discharging circuit 4 functions as a known power factor correction circuit.

Also in all of Figs. 14 to 16, white circles and broken lines coupling the white circles to each other indicate the relationships described above in a case where the critical mode control is adopted. Also in all of Figs. 14 to 16, black circles and solid lines coupling the black circles to each other indicate the relationships described above in a case where control in which the start point ts and the end point te of the charging period CH are determined as described above (which corresponds to the "continuous mode control" described above) is adopted.

Results illustrated in Figs. 14 to 16 are results in a case where the command value Vdc*, the modulation factor ks, and the frequency of the carrier CA in the critical mode control are set to be equal to the command value Vdc*, the modulation factor ks, and the frequency of the carrier CA in the continuous mode control, respectively. A loss of the inverter 5 in the critical mode control is equal to a loss of the inverter 5 in the continuous mode control. In Figs. 14 to 16, an influence due to the loss of the inverter 5 is eliminated. Note herein that a static load in which three-phase Y-coupling of a series-coupling circuit of a reactor and a resistor is achieved is adopted as the inductive load 6.

In Fig. 14, no difference is observed between the relationship described above in the critical mode control and the relationship described above in the continuous mode control.

In Fig. 15, since both of the start point ts and the end point te are determined in accordance with the function G(θ) in the continuous mode control, the switching frequency fsw does not depend on the output power Pmot. In Fig. 15, a value of the switching frequency fsw takes approximately 70 kHz without depending on the output power Pmot. To increase the output power Pmot, it is necessary to increase a peak value of the current il, and, since the current il transitions between the peak value and zero in the critical mode control, it is necessary to extend longer the on time and the off time of the switch Sl. In the critical mode control, there is a relationship of substantially inverse proportion between the switching frequency fsw and the output power Pmot.

In Fig. 15, the switching frequency fsw in the continuous mode control is lower than the switching frequency fsw in the critical mode control when the output power Pmot is equal to or smaller than approximately 1150 W, and the switching frequency fsw in the continuous mode control is higher than the switching frequency fsw in the critical mode control when the output power Pmot is equal to or greater than approximately 1150 W.

In Fig. 16, efficiency in the continuous mode control is higher than efficiency in the critical mode control when the output power Pmot is equal to or smaller than approximately 1150 [W], and the efficiency in the continuous mode control is lower than the efficiency in the critical mode control when the output power Pmot is equal to or smaller than approximately 1150 W. This difference is derived from a magnitude relationship between the switching frequency fsw in the critical mode control and the switching frequency fsw in the continuous mode control. In the critical mode, the higher the switching frequency fsw, the larger the iron loss of the reactor L4 and the switching loss of the switch Sl, leading to lower efficiency.

For example, when the inductive load 6 is an electric motor and the direct-type power conversion circuit 100 causes the electric motor to perform partial load operation, it is possible to acquire a wide operation region that is high in efficiency when the continuous mode control is adopted, compared with a case where the critical mode control is adopted.

### <First Modification of Rectification Circuit 203>

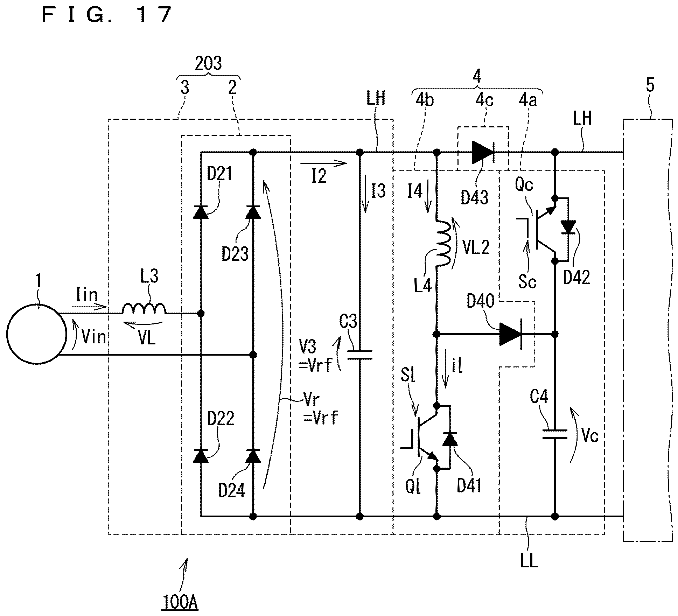

Fig. 17 is a circuit diagram exemplifying a configuration of a direct-type power conversion circuit 100A according to a first modification of the present disclosure. In the configuration of the direct-type power conversion circuit 100A, the configuration of the rectification circuit 203 differs from that in the configuration of the direct-type power conversion circuit 100, while others are identical in configuration. Similar to the direct-type power conversion circuit 100, the direct-type power conversion circuit 100A also includes the charging-and-discharging circuit 4 and the inverter 5, which are controlled by the control device 10, similar to the direct-type power conversion circuit 100.

In the direct-type power conversion circuit 100A, the LC filter 3 that the rectification circuit 203 includes is disposed in a dispersed manner between the input side and the output side of the diode rectifier 2. Specifically, the reactor L3 that the LC filter 3 has is provided between the single-phase AC power source 1 and the input side of the diode rectifier 2, and the capacitor C3 is coupled to the output side of the diode rectifier 2. It can also be said that the reactor L3 is more distant from the inverter 5 than the diode rectifier 2. Such a configuration itself of the rectification circuit 203 as described above is known from Japanese Patent No. 5920520, for example.

As for the polarity of the reactor voltage VL, in the rectification circuit 203 adopting such a configuration as described above, a direction from a low potential to a high potential of the single-phase alternating-current voltage Vin is adopted as positive. A fact that it is possible to handle the value -kL·VL similarly to the direct-type power conversion circuit 100 by setting the polarity of the reactor voltage VL as described above is known from Japanese Patent No. 5920520, for example, together with a technique for setting the polarity.

When the input current Iin flows via the reactor L3 and the diodes D21 and D24, the direction from the low potential to the high potential of the single-phase alternating-current voltage Vin coincides with a direction of an arrow illustrated together with the single-phase alternating-current voltage Vin in Fig. 17. The direction of the current flowing to the reactor L3 coincides with a direction of an arrow illustrated together with the input current Iin in Fig. 17. A potential of the reactor L3 on a side closer to the single-phase AC power source 1 is higher than a potential of the reactor L3 on a side opposite to the side closer to the single-phase AC power source 1.

When the input current Iin flows via the reactor L3 and the diodes D22 and D23, the direction from the low potential to the high potential of the single-phase alternating-current voltage Vin is opposite to the direction of the arrow illustrated together with the single-phase alternating-current voltage Vin in Fig. 17. The direction of the current flowing to the reactor L3 is opposite to the direction of the arrow illustrated together with the input current Iin in Fig. 17. The potential of the reactor L3 on the side closer to the single-phase AC power source 1 is lower than the potential of the reactor L3 on the side opposite to the side closer to the single-phase AC power source 1.

Therefore, as for the polarity of the reactor voltage VL, the direction from the low potential to the high potential of the single-phase alternating-current voltage Vin is adopted as positive.

As for the polarity of the reactor voltage VL, a direction opposite to a direction in which the input current Iin flows is adopted as positive, also in both of a case where the input current Iin flows via the diodes D21 and D24 and a case where the input current Iin flows via the diodes D22 and D23, when the input current Iin flows between the diode rectifier 2 and the reactor L3.

As for the polarity of the reactor voltage VL, also in the direct-type power conversion circuit 100, a direction opposite to a direction of the output current I2 flowing between the diode rectifier 2 and the reactor L3, more specifically, a component of the input current Iin supplied from the AC power source 1 in the output current I2 is adopted as positive. Therefore, also in both of the direct-type power conversion circuits 100 and 100A, it can be said that, as for the polarity of the reactor voltage VL, the direction opposite to the direction in which the current flowing between the reactor L3 and the diode rectifier 2 flows, more specifically, a component of the input current Iin supplied from the AC power source 1 in the current flows is adopted as positive.

Also in both of the direct-type power conversion circuits 100 and 100A, the capacitor C3 is directly coupled between the direct-current power source lines LL and LH. In the direct-type power conversion circuit 100, Vr = |Vin| and V3 = Vrf are satisfied. In the direct-type power conversion circuit 100A, Vr = V3 = Vrf is satisfied. By taking into consideration that the rectified voltage Vrf is acquired by allowing a single-phase alternating-current voltage |Vin| having undergone the full-wave rectification to undergo the low-pass filtering, it can be said that the polarity of the inter-terminal voltage V3 coincides with the polarity of a voltage on the output side of the diode rectifier 2 (which can also be said to be the side of the diode rectifier 2, to which the capacitor C3 is coupled) also in both of the direct-type power conversion circuits 100 and 100A. More specifically, it can be said that, as for the polarity of the inter-terminal voltage V3, a direction from the direct-current power source line LL to the direct-current power source line LH is adopted as positive.

### <Second Modification of Rectification Circuit 203>

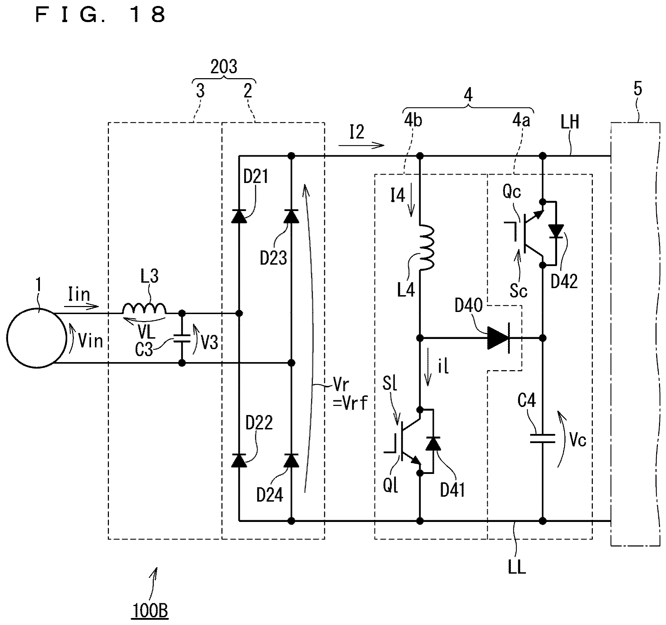

Fig. 18 is a circuit diagram exemplifying a configuration of a direct-type power conversion circuit 100B according to a second modification of the present disclosure. The configuration of the direct-type power conversion circuit 100B is identical to the configuration of the direct-type power conversion circuit 100 except for the configuration of the rectification circuit 203. Similar to the direct-type power conversion circuit 100, the direct-type power conversion circuit 100B also includes the charging-and-discharging circuit 4 and the inverter 5, which are controlled by the control device 10, similar to the direct-type power conversion circuit 100. However, the current blocking unit 4c is not necessary in the charging-and-discharging circuit 4, due to a reason described later. Fig. 18 exemplifies a case where the current blocking unit 4c is removed by means of short-circuiting, specifically, a case where the reactor L4 and the switch Sc are directly coupled to each other on a side opposite to the diode D40.

In the direct-type power conversion circuit 100B, the LC filter 3 that the rectification circuit 203 includes is disposed on the input side of the diode rectifier 2. Specifically, the reactor L3 that the LC filter 3 has is provided between the single-phase AC power source 1 and the input side of the diode rectifier 2, and the capacitor C3 is coupled to the input side of the diode rectifier 2. It can also be said that the reactor L3 and the capacitor C3 are more distant from the inverter 5 than the diode rectifier 2. Such a configuration itself of the rectification circuit 203 as described above is known from Japanese Patent No. 5920520, for example.

As for the polarity of the reactor voltage VL, also in the rectification circuit 203 adopting such a configuration as described above, similar to the rectification circuit 203 adopted in the direct-type power conversion circuit 100A, the direction from the low potential to the high potential of the single-phase alternating-current voltage Vin is adopted as positive, and the direction opposite to the direction in which the input current Iin flows is adopted as positive. Therefore, also in all of the direct-type power conversion circuits 100, 100A, and 100B, it can be said that, as for the polarity of the reactor voltage VL, the direction opposite to the direction in which the current flowing between the reactor L3 and the diode rectifier 2 flows, more specifically, a component of the input current Iin supplied from the AC power source 1 in the current flows is adopted as positive.

Since, in the direct-type power conversion circuit 100B, the diode rectifier 2 is present between the capacitor C3 and the capacitor C4, the diode rectifier 2 takes the function of the current blocking unit 4c, making the current blocking unit 4c unnecessary.

The capacitor C3 is coupled between a coupling point between an anode of the diode D21 and a cathode of the diode D22 (hereinafter temporarily referred to as a "first coupling point") and a coupling point between an anode of the diode D23 and a cathode of the diode D24 (hereinafter temporarily referred to as a "second coupling point").

When the input current Iin flows via the diodes D21 and D24, the direction from the low potential to the high potential of the single-phase alternating-current voltage Vin coincides with a direction of an arrow illustrated together with the single-phase alternating-current voltage Vin in Fig. 18. At this time, a potential at the first coupling point is higher than a potential at the second coupling point, and a positive direction of the inter-terminal voltage V3 coincides with a direction of an arrow illustrated together with the inter-terminal voltage V3 in Fig. 18.

When the input current Iin flows via the diodes D22 and D23, the direction from the low potential to the high potential of the single-phase alternating-current voltage Vin is opposite to the direction of the arrow illustrated together with the single-phase alternating-current voltage Vin in Fig. 18. At this time, the potential at the first coupling point is lower than the potential at the second coupling point, and the positive direction of the inter-terminal voltage V3 is opposite to the direction of the arrow illustrated together with the inter-terminal voltage V3 in Fig. 18.

It can be said that, as for the polarity of the inter-terminal voltage V3, the direction from the low potential to the high potential of the single-phase alternating-current voltage Vin is adopted as positive.

In the direct-type power conversion circuit 100B, the first coupling point and the second coupling point are present on a side of the diode rectifier 2, to which the capacitor C3 is coupled, and polarities of voltages at these coupling points and the polarity of the inter-terminal voltage V3 coincide with each other. In the direct-type power conversion circuit 100, the capacitor C3 is provided to the diode rectifier 2 via the reactor L3, on a side where the diode rectifier 2 outputs the voltage Vr = |Vin|. A polarity of the voltage Vr and a polarity of the rectified voltage Vrf coincide with each other.

Therefore, it can be said that the polarity of the inter-terminal voltage V3 coincides with the polarity of the voltage on the side to which the capacitor C3 is coupled among the output side and the input side of the diode rectifier 2 also in all of the direct-type power conversion circuits 100, 100A, and 100B.

### <Third Modification of Rectification Circuit 203>

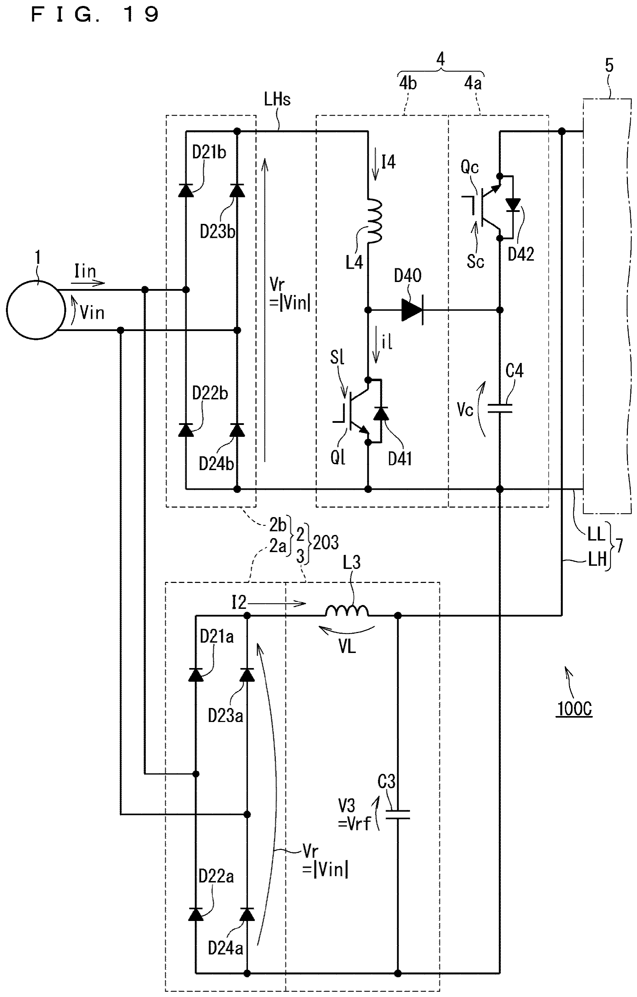

Fig. 19 is a circuit diagram exemplifying a configuration of a direct-type power conversion circuit 100C according to a third modification of the present disclosure. The configuration of the direct-type power conversion circuit 100C is identical to the configuration of the direct-type power conversion circuit 100 except for the configuration of the rectification circuit 203. Similar to the direct-type power conversion circuit 100, the direct-type power conversion circuit 100C also includes the charging-and-discharging circuit 4 and the inverter 5, which are controlled by the control device 10, similar to the direct-type power conversion circuit 100. However, the current blocking unit 4c is not necessary in the charging-and-discharging circuit 4, due to a reason described later. Fig. 19 exemplifies a case where the current blocking unit 4c is opened and removed, specifically, a case where the reactor L4 and the switch Sc are separated away from each other on sides opposite to each other with respect to the diode D40.

In the rectification circuit 203 in the direct-type power conversion circuit 100C, the diode rectifier 2 includes a pair of diode rectifiers 2a and 2b.

Similar to the diode rectifier 2 that the direct-type power conversion circuit 100 includes, the diode rectifier 2a is provided between the LC filter 3 and the single-phase AC power source 1.

For example, the diode rectifier 2a includes diodes D21a, D22a, D23a, and D24a. The diodes D21a, D22a, D23a, and D24a form a bridge circuit. The diode rectifier 2a has an input side to which the single-phase alternating-current voltage Vin is applied from the single-phase AC power source 1 and an output side. The diode rectifier 2a performs the single-phase full-wave rectification on the single-phase alternating-current voltage Vin to acquire a voltage |Vin|, and outputs the voltage |Vin| as a voltage Vr from the output side.

The reactor L3 is provided between the diode rectifier 2a and the capacitor C3. The output current I2 flows from the diode rectifier 2a to the LC filter 3, and a current flowing to the reactor L3 coincides with the output current I2. In the direct-type power conversion circuit 100C, the capacitor C3 is directly coupled between the direct-current power source lines LH and LL.

Similar to the diode rectifier 2 that the direct-type power conversion circuits 100A and 100B include, the diode rectifier 2b is coupled to the charging-and-discharging circuit 4 via direct-current power source lines LHs and LL without interposing the reactor L3.

For example, the diode rectifier 2b includes diodes D21b, D22b, D23b, and D24b. The diodes D21b, D22b, D23b, and D24b form a bridge circuit. The diode rectifier 2b has an input side to which the single-phase alternating-current voltage Vin is applied from the single-phase AC power source 1 and an output side. The diode rectifier 2b performs the single-phase full-wave rectification on the single-phase alternating-current voltage Vin to acquire a voltage |Vin|, and outputs the voltage |Vin| as a voltage Vr from the output side. A potential in the direct-current power source line LL is lower than a potential in the direct-current power source line LHs.

The voltage Vr that the diode rectifier 2b outputs is applied to the charging-and-discharging circuit 4, specifically, the direct coupling between the switch Sl and the reactor L4. The current that the diode rectifier 2b outputs coincides with the reactor current I4. When the switch Sl is turned on, the reactor current I4 flows from the direct-current power source line LHs to the direct-current power source line LL via the reactor L4 and the switch SI. When the switch Sl is turned off, the reactor current I4 flows to the capacitor C4 via the diode D40 to charge the capacitor C4.

In the charging-and-discharging circuit 4, a high potential side of the reactor L4 is coupled to a high potential side on the output side of the diode rectifier 2b via the direct-current power source line LHs, and a high potential side of the switch Sc is coupled to the high potential side on the output side of the diode rectifier 2b via the direct-current power source line LH and the reactor L3. In the charging-and-discharging circuit 4, the current blocking unit 4c is opened and removed, and a current flowing from the diode rectifier 2b to the charging-and-discharging circuit 4 flows independently of the output current I2 flowing from the diode rectifier 2a to the LC filter 3. Such a configuration itself of the rectification circuit 203 and a fact that the direct-type power conversion circuit 100C may be controlled similarly to the direct-type power conversion circuit 100 are known from Japanese Patent No. 5381970, for example.

As for the polarity of the reactor voltage VL, also in the direct-type power conversion circuit 100C, similar to the direct-type power conversion circuit 100, a direction opposite to a direction of the output current I2 flowing between the diode rectifier 2a and the reactor L3, more specifically, a component supplied from the AC power source 1 in the output current I2 is adopted as positive.

Also in the direct-type power conversion circuit 100C, the capacitor C3 is directly coupled between the direct-current power source lines LL and LH, similar to the direct-type power conversion circuit 100. Also in both of the direct-type power conversion circuits 100 and 100C, Vr = |Vin| and V3 = Vrf are satisfied. It can be said that the polarity of the inter-terminal voltage V3 coincides with a polarity of a voltage on the output side of the diode rectifier 2 in the direct-type power conversion circuit 100 (which can also be said to be the side of the diode rectifier 2, to which the capacitor C3 is coupled), and coincides with a polarity of a voltage on the output side of the diode rectifier 2a in the direct-type power conversion circuit 100C (which can also be said to be the side of the diode rectifier 2a, to which the capacitor C3 is coupled). It can be said that, as for the polarity of the inter-terminal voltage V3, a direction from the direct-current power source line LL to the direct-current power source line LH is adopted as positive.

### <Fourth Modification of Rectification Circuit 203>

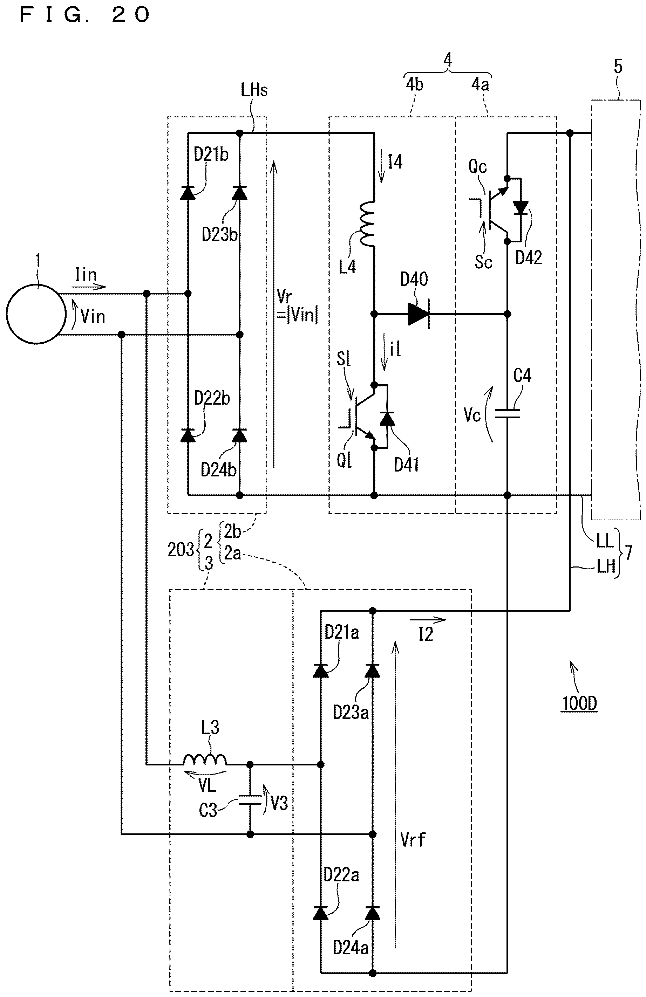

Fig. 20 is a circuit diagram exemplifying a configuration of a direct-type power conversion circuit 100D according to a fourth modification of the present disclosure. The configuration of the direct-type power conversion circuit 100D is identical to the configuration of the direct-type power conversion circuit 100C except for the configuration of the rectification circuit 203.

Specifically, the rectification circuit 203 in the direct-type power conversion circuit 100D differs, compared with the rectification circuit 203 in the direct-type power conversion circuit 100C, in that an order of arrangement of the diode rectifier 2a and the LC filter 3 between the single-phase AC power source 1 and the direct-current power source lines LH and LL has been switched. Due to the difference, the diode rectifier 2a in the direct-type power conversion circuit 100D does not output the voltage |Vin|, but outputs the rectified voltage Vrf, similar to the diode rectifier 2 in the direct-type power conversion circuit 100B.

The capacitor C3 is more distant from the inverter 5 than the diode rectifier 2a, and the reactor L3 is more distant from the inverter 5 than the diode rectifier 2a.

Similar to the fact that direct-type power conversion circuit 100B may be controlled similarly to the direct-type power conversion circuit 100, the direct-type power conversion circuit 100D may be controlled similarly to the direct-type power conversion circuit 100C.

As for the polarity of the reactor voltage VL, also in the direct-type power conversion circuit 100D, similar to the direct-type power conversion circuit 100B, the direction from the low potential to the high potential of the single-phase alternating-current voltage Vin is adopted as positive, and a direction opposite to a direction in which the current flowing between the reactor L3 and the diode rectifier 2a flows, more specifically, a component supplied from the AC power source 1 in the current flows is adopted as positive.

Also in the direct-type power conversion circuit 100D, similar to the direct-type power conversion circuit 100B, it can be said that, as for the polarity of the inter-terminal voltage V3, the direction from the low potential to the high potential of the single-phase alternating-current voltage Vin is adopted as positive. It can also be said that the polarity of the inter-terminal voltage V3 coincides with the polarity of the voltage on the input side of the diode rectifier 2a (which can also be said to be the side of the diode rectifier 2a, to which the capacitor C3 is coupled).

### <Modification of Variation ΔF>

In the direct-type power conversion circuits 100C and 100D, the LC filter 3 and the charging-and-discharging circuit 4 are coupled in parallel between the AC power source 1 and the direct-current link 7. In this coupling, the current flowing to the charging-and-discharging circuit 4, specifically, the reactor current I4 is corrected based on the variation ΔF, cancelling at least part of a current generated due to resonance generated in the LC filter 3. For example, a value proportional to a value (-I2) acquired by subtracting the output current I2 from zero is adopted as the variation ΔF. The reactor voltage VL is inputted to the resonance suppression unit 1035, and there is a relationship of VL = Lf·sI2 by introducing an inductance Lf of the reactor L3 and a differential operator s. Since the inductance Lf is known, the output current I2 is acquired by dividing an integrated value of the reactor voltage VL by the inductance Lf, for example, and the variation ΔF is set.

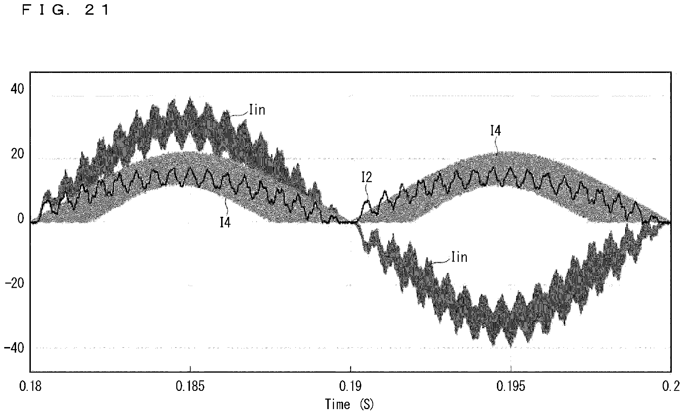

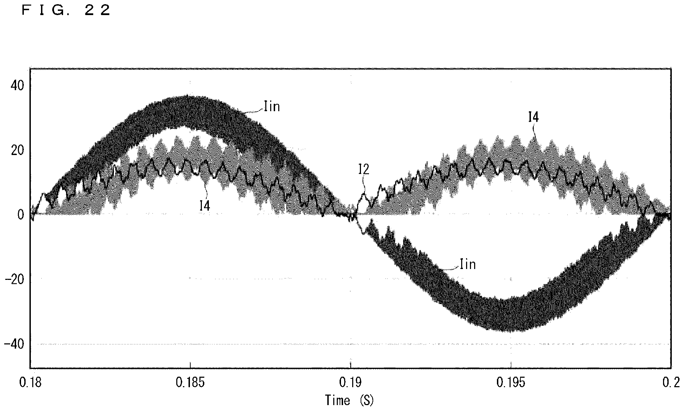

Figs. 21 and 22 are both graphs illustrating waveforms of the input current Iin, the output current I2, and the reactor current I4 in the direct-type power conversion circuit 100C. In both of the graphs, a case where |sinθ| is adopted as the function F(θ) is exemplified. Fig. 21 exemplifies a case when ΔF = 0 is satisfied. Fig. 22 exemplifies a case when ΔF = -I2 is satisfied. Fig. 22 illustrates a modification of the variation ΔF, and Fig. 21 illustrates a comparison of the modification.

The waveform of the reactor current I4 illustrated in Fig. 22 receives an influence of the variation ΔF, and is greatly distorted from the waveform of the reactor current I4 illustrated in Fig. 21. The waveform of the input current Iin illustrated in Fig. 22 receives an influence of the distortion of the reactor current I4, and its distortion is improved, compared with the waveform of the input current Iin illustrated in Fig. 21.

While the embodiment and the modifications have been described above, it will be understood that various changes in form and detail may be made therein without departing from the spirit and scope of the claims. The embodiment and the modifications described above, which vary in type, can be combined with each other.

### Reference Signs List

2, 2a, 2b diode rectifier
4 charging-and-discharging circuit
4a discharging circuit
4b charging circuit
5 inverter
100, 100A, 100B, 100C, 100D direct-type power conversion circuit
203 rectification circuit
C3, C4 capacitor
CH charging period
D40 diode
I2 current
I4 reactor current
Iin input current
Im amplitude
F(θ), G(θ) function
J, B value
L3, L4 reactor
LH, LL direct-current power source line
Sl switch
Tsw cycle
V3 inter-terminal voltage
VL reactor voltage
Vc capacitor voltage
Vdc direct-current voltage
Vdc* command value
Vin single-phase alternating-current voltage
Vm amplitude
Vrf rectified voltage
Dc discharging duty
kb distribution ratio
te end point
ts start point
ΔF variation (correction term)
θ phase

## Claims

1. A direct-type power conversion circuit (100, 100A, 100B, 100C, 100D) comprising:
a first power source line (LH);
a second power source line (LL) to which a potential lower than a potential applied to the first power source line is applied;
a rectification circuit (203) that has an input side to which a single-phase alternating-current voltage (Vin) is applied from an alternating-current (AC) power source (1) and an output side to which the first power source line and the second power source line are coupled, and that outputs a rectified voltage (Vrf) acquired by performing full-wave rectification and low-pass filtering on the single-phase alternating-current voltage (Vin);
a charging-and-discharging circuit (4) provided between the first power source line and the second power source line on the output side of the rectification circuit; and
an inverter (5) to which a direct-current voltage (Vdc) serving as a voltage between the first power source line and the second power source line is inputted,
wherein
the rectification circuit (203) includes:
a diode rectifier (2; 2a, 2b) used for the full-wave rectification;
a first capacitor (C3) coupled between the first power source line and the second power source line directly or indirectly via the diode rectifier (2; 2a); and
a first reactor (L3) that performs the low-pass filtering in cooperation with the first capacitor (C3),
the charging-and-discharging circuit (4) includes:
a discharging circuit (4a) that includes a second capacitor (C4) provided between the first power source line and the second power source line and that allows the second capacitor to discharge electricity; and
a charging circuit (4b) that boosts the single-phase alternating-current voltage (|Vin|) having undergone the full-wave rectification or the rectified voltage (Vrf) to charge the second capacitor (C4) for a charging period (CH) having a duration that is set depending on a phase (θ) of the single-phase alternating-current voltage (Vin) without depending on an amplitude (Im) of an input current (Iin) inputted to the rectification circuit (203),
when a voltage (VL) of the first reactor (L3) decreases, both of a start point (ts) and an end point (te) of the charging period (CH) shift toward a delay phase side with respect to the phase (θ),
when a voltage (V3) of the first capacitor (C3) increases, both of the start point (ts) and the end point (te) shift toward the delay phase side with respect to the phase,
as for a polarity of the voltage (VL) of the first reactor (L3), a direction opposite to a direction of a current that is supplied from the AC power source (1) and that flows between the diode rectifier (2; 2a) and the first reactor (L3) is adopted as positive, and
a polarity of the voltage (V3) of the first capacitor (C3) coincides with a polarity of a voltage on a side to which the first capacitor (C3) is coupled among an output side and an input side of the diode rectifier (2; 2a).

2. The direct-type power conversion circuit (100, 100A, 100B, 100C, 100D) according to claim 1, wherein
the second capacitor (C4) discharges electricity at a duty (dc) proportional to a product of, only in a period in which a cosine value (cos(2θ)) of a value that is twice the phase (θ) is positive, the cosine value and a command value (Vdc*) for the direct-current voltage,
the charging circuit (4b) includes:
a second reactor (L4) coupled in series to the second capacitor (C4) on the output side of the rectification circuit (203);
a diode (D40) that is positioned on a high potential side of the second capacitor (C4), that is coupled between the second reactor (L4) and the second capacitor (C4), and that has a forward direction from the second reactor (L4) to the second capacitor (C4); and
a switch (Sl) that switches whether to allow a reactor current (I4) flowing through the second reactor (L4) to flow to the second capacitor (C4) via the diode (D40) or to the second power source line (LL),
the reactor current (I4) flows to the second power source line (LL) via the switch (Sl) with increasing magnitude from the end point (te) of a first charging period to the start point (ts) of a second charging period immediately after the first charging period,
the start point (ts) is a point in time at which the reactor current (I4) increases and reaches an upper limit value (il^),
the reactor current (I4) flows to the second capacitor (C4) in the charging period (CH),
the upper limit value (il^) is a product of the amplitude (Im) and a predetermined function (G(θ)) related to the phase,
the predetermined function (G(θ)) takes a value acquired by adding a correction term (ΔF) to a product (F(θ)) of a value acquired by subtracting a half value ((2·sin²θ)⁻¹) of an inverse number of a square (sin²θ) of a sine value of the phase from 1 and an absolute value (|sinθ|) of the sine value,
the correction term (ΔF) increases as the voltage (VL) of the first reactor (L3) decreases, and
the correction term (ΔF) increases as the voltage (V3) of the first capacitor (C3) increases.

3. The direct-type power conversion circuit (100, 100A, 100C, 100D)) according to claim 1, wherein
the second capacitor (C4) discharges electricity at a duty (dc) proportional to a product of a square (cos²θ) of a cosine value (cosθ) of the phase (θ) and a command value (Vdc*) for the direct-current voltage,
the charging circuit (4b) includes:
a second reactor (L4) coupled in series to the second capacitor (C4) on the output side of the rectification circuit (203);
a diode (D40) that is positioned on a high potential side of the second capacitor (C4), that is coupled between the second reactor (L4) and the second capacitor (C4), and that has a forward direction from the second reactor (L4) to the second capacitor (C4); and
a switch (Sl) that switches whether to allow a reactor current (I4) flowing through the second reactor (L4) to flow to the second capacitor (C4) via the diode (D40) or to the second power source line (LL),
the reactor current (I4) flows to the second power source line (LL) via the switch (Sl) with increasing magnitude from the end point (te) of a first charging period to the start point (ts) of a second charging period immediately after the first charging period,
the start point (ts) is a point in time at which the reactor current (I4) increases and reaches an upper limit value (il^),
the reactor current (I4) flows to the second capacitor (C4) in the charging period (CH),
the upper limit value (il^) is a product of the amplitude (Im) and a predetermined function (G(θ)) related to the phase,
the predetermined function (G(θ)) takes a value acquired by adding a correction term (ΔF) to a product (F(θ)) of a value acquired by adding 1/2 to a half value of a product of a cosine value (cos(2θ)) of a value that is twice the phase and a coefficient (1 - kb) equal to or greater than 0 and equal to or smaller than 1 and an absolute value (|sinθ|) of a sine value,
the correction term (ΔF) increases as the voltage (VL) of the first reactor (L3) decreases, and
the correction term (ΔF) increases as the voltage (V3) of the first capacitor (C3) increases.

4. The direct-type power conversion circuit (100, 100A, 100B, 100C, 100D) according to claim 1, wherein
the second capacitor (C4) discharges electricity at a duty (dc) proportional to a product of, only in a period in which a cosine value (cos(2θ)) of a value that is twice the phase (θ) is positive, the cosine value and an amplitude (Vm) of the single-phase alternating-current voltage,
the charging circuit (4b) includes:
a second reactor (L4) coupled in series to the second capacitor (C4) on the output side of the rectification circuit (203);
a diode (D40) that is positioned on a high potential side of the second capacitor (C4), that is coupled between the second reactor (L4) and the second capacitor (C4), and that has a forward direction from the second reactor (L4) to the second capacitor (C4); and
a switch (Sl) that switches whether to allow a reactor current (I4) flowing through the second reactor (L4) to flow to the second capacitor (C4) via the diode (D40) or to the second power source line (LL),
the reactor current (I4) flows to the second power source line (LL) via the switch (Sl) with increasing magnitude from the end point (te) of a first charging period to the start point (ts) of a second charging period immediately after the first charging period,
the start point (ts) is a point in time at which the reactor current (I4) increases and reaches an upper limit value (il^),
the reactor current (I4) flows to the second capacitor (C4) in the charging period (CH),
the upper limit value (il^) is a product of the amplitude (Im) and a predetermined function (G(θ)) related to the phase,
the predetermined function (G(θ)) takes a value acquired by adding a correction term (ΔF) to a product (F(θ)) of a value acquired by subtracting a half value ((2·sin²/(θ))⁻¹) of an inverse number of a square (sin²(θ)) of a sine value of the phase from 1, a coefficient (kb) equal to or greater than 0 and equal to or smaller than 1, a coefficient (π/√8), and an absolute value (|sinθ|) of the sine value,
the correction term (ΔF) increases as the voltage (VL) of the first reactor (L3) decreases, and
the correction term (ΔF) increases as the voltage (V3) of the first capacitor (C3) increases.

5. The direct-type power conversion circuit (100, 100A, 100C, 100D) according to claim 1, wherein
the second capacitor (C4) discharges electricity at a duty (dc) taking a value (1 - B) acquired by subtracting a first value (B) from 1,
the charging circuit (4b) includes:
a second reactor (L4) coupled in series to the second capacitor (C4) on the output side of the rectification circuit (203);
a diode (D40) that is positioned on a high potential side of the second capacitor (C4), that is coupled between the second reactor (L4) and the second capacitor (C4), and that has a forward direction from the second reactor (L4) to the second capacitor (C4); and
a switch (Sl) that switches whether to allow a reactor current (I4) flowing through the second reactor (L4) to flow to the second capacitor (C4) via the diode (D40) or to the second power source line (LL),
the reactor current (I4) flows to the second power source line (LL) via the switch (Sl) with increases magnitude from the end point (te) of a first charging period to the start point (ts) of a second charging period immediately after the first charging period,
the start point (ts) is a point in time at which the reactor current (I4) increases and reaches an upper limit value (il^),
the reactor current (I4) flows to the second capacitor (C4) in the charging period (CH),
the upper limit value (il^) is a product of the amplitude (Im) and a predetermined function (G(θ)) related to the phase,
the predetermined function (G(θ)) takes a sum of a value (F(θ)) acquired by subtracting a product (B·J) of the first value (B) and a second value (J) from an absolute value (|sinθ|) of a sine value of the phase and a correction term (ΔF) ,
the first value (B) is a ratio ([Vdc* - Vc] / [Vrec - Vc]) of, with respect to a value (Vrec - Vc) acquired by subtracting a voltage (Vc) of the second capacitor (C4) from a product (Vrec) of an amplitude (Vm) of the single-phase alternating-current voltage and the absolute value (|sinθ|), a value (Vdc* - Vc) acquired by subtracting the voltage (Vc) of the second capacitor from a command value (Vdc*) for the direct-current voltage,
the second value (J) is a product of a half value of a value acquired by subtracting, from 1, a product of a cosine value (cos(2θ)) of a value that is twice the phase and a coefficient (1 - kb) equal to or greater than 0 and equal to or smaller than 1 and a ratio (Vm / Vdc*) of the amplitude (Vm) of the single-phase alternating-current voltage with respect to the command value (Vdc*) for the direct-current voltage,
the correction term (ΔF) increases as the voltage (VL) of the first reactor (L3) decreases, and
the correction term (ΔF) increases as the voltage (V3) of the first capacitor (C3) increases.

6. The direct-type power conversion circuit (100, 100A, 100B, 100C, 100D) according to any one of claims 2 to 5, wherein the duration of the charging period (CH) is proportional to a sum (G(θ)) of a first amount (F(θ)) that depends on the phase (θ) without depending on both of the voltage (VL) of the first reactor (L3) and the voltage (V3) of the first capacitor (C3) and a second amount (ΔF) that depends on one or both of the voltage (VL) of the first reactor (L3) and the voltage (V3) of the first capacitor (C3).

7. The direct-type power conversion circuit (100, 100A, 100B, 100C, 100D) according to claim 1, wherein
the charging circuit (4b) performs a chopping of a second input current (I4) inputted to the charging circuit (4b) to charge the second capacitor (C4),
the charging period (CH) decreases as a value acquired by dividing an average value of the second input current (I4) in a cycle (Tsw) of the chopping by a maximum value of the average value decreases,
the charging period (CH) increases as the voltage (VL) of the first reactor (L3) decreases, and
the charging period (CH) increases as the voltage (V3) of the first capacitor (C3) increases.

8. The direct-type power conversion circuit (100, 100A, 100C) according to claim 1, wherein the first capacitor (C3) is directly coupled between the first power source line (LH) and the second power source line (LL), and, as for the polarity of the voltage (V3) of the first capacitor (C3), a direction from the second power source line (LL) to the first power source line (LH) is adopted as positive.

9. The direct-type power conversion circuit (100B, 100D) according to claim 1, wherein
the first capacitor (C3) is more distant from the inverter (5) than the diode rectifier (2; 2a), and,
as for the polarity of the voltage (V3) of the first capacitor (C3), a direction from a low potential to a high potential of the single-phase alternating-current voltage (Vin) is adopted as positive.

10. The direct-type power conversion circuit (100, 100C) according to claim 1, wherein
the first reactor (L3) is provided between the diode rectifier (2; 2a) and the first capacitor (C3), and, as for the polarity of the voltage (VL) of the first reactor (L3), a direction opposite to a direction of a current (I2) flowing to the first reactor (L3) is adopted as positive.

11. The direct-type power conversion circuit (100A, 100B) according to claim 1, wherein
the first reactor (L3) is more distant from the inverter (5) than the diode rectifier (2; 2a), and,
as for the polarity of the voltage (VL) of the first reactor (L3), a direction from a low potential to a high potential of the single-phase alternating-current voltage (Vin) is adopted as positive.

12. The direct-type power conversion circuit (100, 100A, 100B) according to claim 1, wherein
the charging circuit (4b) includes:
a second reactor (L4) coupled in series to the second capacitor (C4) between the first power source line (LH) and the second power source line (LL) on a side closer to the first power source line (LH) than the second capacitor;
a diode (D40) that is coupled between the second reactor (L4) and the second capacitor (C4), and that has a forward direction from the second reactor (L4) to the second capacitor (C4); and
a switch (Sl) that switches whether to allow a reactor current (I4) flowing from the first power source line to the second reactor (L4) to flow to the second capacitor (C4) via the diode (D40) or to the second power source line (LL), and
the rectified voltage (Vrf) is applied to a series coupling of the switch (Sl) and the second reactor (L4).

13. The direct-type power conversion circuit (100C, 100D) according to claim 1, wherein
the rectification circuit (203) further includes
a second diode rectifier (2b) that performs the full-wave rectification on the single-phase alternating-current voltage (Vin) to acquire a second rectified voltage (|Vin|), and
the charging circuit (4b) includes:
a second reactor (L4) coupled in series to the second capacitor (C4) on an output side of the second diode rectifier (2b) ;
a diode (D40) that is positioned on a high potential side of the second capacitor (C4), that is coupled between the second reactor (L4) and the second capacitor (C4), and that has a forward direction from the second reactor (L4) to the second capacitor (C4); and
a switch (Sl) that switches whether to allow a reactor current (I4) flowing from the second diode rectifier (2b) to the second reactor (L4) to flow to the second capacitor (C4) via the diode (D40) or to the second power source line (LL).

14. The direct-type power conversion circuit (100A, 100B, 100C, 100D) according to claim 1, wherein
the charging circuit (4b) includes:
a second reactor (L4) coupled in series to the second capacitor (C4) on the output side of the diode rectifier (2) without interposing the first reactor (L3);
a diode (D40) that is positioned on a high potential side of the second capacitor (C4), that is coupled between the second reactor (L4) and the second capacitor (C4), and that has a forward direction from the second reactor (L4) to the second capacitor (C4); and
a switch (Sl) that switches whether to allow a reactor current (I4) flowing from the rectification circuit (203) to the second reactor (L4) to flow to the second capacitor (C4) via the diode (D40) or to the second power source line (LL).
